(19) Europäisches Patentamt
European Patent Office
Office européen des brevets

(11) EP 1 160 260 B1

(12) **EUROPEAN PATENT SPECIFICATION**

(45) Date of publication and mention of the grant of the patent:
**13.04.2011 Bulletin 2011/15**

(51) Int Cl.:
***C08F 8/44*** *(2006.01)* ***C08F 8/12*** *(2006.01)*

(21) Application number: **01104369.2**

(22) Date of filing: **23.02.2001**

(54) **Porous polymer particle, anion exchanger, producing method thereof, column for ion chromatography, and method for measuring anions**

Poröse Polymerteilchen, Anionenaustauscher, Verfahren zur Herstellung, Ionenchromatographiesäule, und Verfahren zur Anionenmessung

Particules polymériques poreuses, échangeurs d'anions, leur procédé de fabrication, colonne de chromatographie ionique, et procédé de mesure d'anions

(84) Designated Contracting States:
**AT BE CH CY DE DK ES FI FR GB GR IE IT LI LU MC NL PT SE TR**

(30) Priority: **29.05.2000 JP 2000158367**
**19.12.2000 JP 2000386002**
**27.12.2000 JP 2000398094**

(43) Date of publication of application:
**05.12.2001 Bulletin 2001/49**

(60) Divisional application:
**06002565.7 / 1 669 377**
**06002566.5 / 1 657 261**

(73) Proprietor: **SHOWA DENKO K.K.**
**Minato-ku, Tokyo (JP)**

(72) Inventors:
- **Kotsuka, Takashi**
  **Kawasaki-ku,**
  **Kawasaki,**
  **Kanagawa 210-0867 (JP)**
- **Shimbo, Kuniaki**
  **Kawasaki-ku,**
  **Kawasaki,**
  **Kanagawa 210-0867 (JP)**
- **Suzuki, Hiroshi**
  **Kawasaki-shi,**
  **Kanagawa 210-0867 (JP)**
- **Sakuma, Hisako**
  **40237 Düsseldorf (DE)**
- **Tokuda, Toshio**
  **Minato-ku,**
  **Tokyo 105-0011 (JP)**

(74) Representative: **Strehl Schübel-Hopf & Partner**
**Maximilianstrasse 54**
**80538 München (DE)**

(56) References cited:
**EP-A1- 0 066 165**
**EP-A1- 0 556 688**
**EP-A2- 0 043 074**
**FR-A1- 2 333 005**
**FR-A1- 2 460 971**
**GB-A- 2 034 328**
**US-A- 4 298 700**
**US-A- 4 684 667**

- **CHEMICAL ABSTRACTS, vol. 87, no. 4, 25 July 1977 (1977-07-25) Columbus, Ohio, US; abstract no. 24408m, page 49; column 1; XP002177192 & JP 52 035779 A (MARUZEN OIL CO., LTD.)**
- **DATABASE WPI Section Ch, Week 199722, Derwent Publications Ltd., London, GB; Class A96, AN 1997-241750, XP002177193 & JP 09 077790 A (ASAHI MEDICAL CO., LTD.) 25 March 1997**
- **DATABASE WPI Section Ch, Week 200132, Derwent Publications Ltd., London, GB; Class A14, AN 2001-303888, XP002177194 & JP 2001 040032 A (SHOWA DENKO KK) 13 February 2001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 160 260 B1

## Description

TECHNICAL FIELD

The present invention relates to a porous polymer particle for anion analysis liquid chromatography, to anion exchanger comprising the particle, to a producing method thereof, and to packing material for anion chromatography.

More particularly, the present invention relates to a porous polymer particle that has alkali resistance and high-strength, can be adjusted for the position of occurrence of carbonate dip, and can be used in particularly for a suppressor method ion chromatography, anion exchanger comprising the particles, a producing method thereof, and a packing material for anion chromatography using the anion exchanger above.

BACKGROUND ART

In examination of water pollution, analysis of food and the like, analysis of 7 kinds of ions, i.e., fluoride ion ($F^-$), chloride ion ($Cl^-$), nitrite ion ($NO_2^-$), bromide ion ($Br^-$), nitrate ion ($NO_3^-$), sulfate ion ($SO_4^{2-}$), and phosphate ion ($PO_4^{3-}$) are important and called "7 standard inorganic anions". Recently, in the analysis of inorganic anions including the 7 standard inorganic anions, ion chromatography is being used as an efficient and high-precision/high-sensitive means for analyzing them.

In the ion chromatography, a sample containing an ion seed is injected into an ion exchange column while feeding an eluent into the column and the ions (kind, amount) separated and eluted from the column with a time gap due to the difference in the retention time are detected by a high-sensitivity detector such as electrical conductivity detector. The ion chromatography includes "a suppressor method" using a suppressor and" a non-suppressor method" using no suppressor.

In the non-suppressor method, organic acids having low conductivity such as phthalic acid, p-hydroxybenzoic acid, and trimesic acid are used and the anions are detected directly by a conductivity detector immediately after they were separated by a separation column. The conductivity detector is low in background so that high-sensitivity analysis is possible. The pH of the eluent is not particularly limited and various separation conditions can be selected.

Generally used packing (hereinafter, also referred to as "anion exchanger" ) of a column for a non-suppressor method includes chemical bond type ion exchangers comprising copolymer particles of a vinyl ester- or vinyl ether-containing monomer having a hydroxyl group and a vinyl ester- or vinyl ether-crosslinking monomer.

The column for a non-suppressor method that has been being conventionally used is packed with the above packing. In order to make the column high-powered, packing must be downsized than ever.

However, the above packing has insufficient mechanical strength and it has not been easy to reduce its particle diameter.

On the other hand, in the ion chromatography by a suppressor method, a suppressor, which is an apparatus for substituting the cations in the liquid by hydrogen ions is used. As shown in Fig. 1, the suppressor is connected to between a separation column and a detector and functions to decrease the background and increase the sensitivity of measurement when detecting ions using an electrical conductivity detector.

In "the suppressor method", a mixed solution of sodium carbonate and sodium hydrogencarbonate, aboratebuffer, anaqueous sodium hydroxide solution, an aqueous potassium hydroxide solution or the like is passed through as the eluent to separate the sample ion in the separation column and thereafter the ion separated is detected by an electrical conductivity detector through a suppressor. The electrical conductivity measured by the detector includes the electrical conductivity of the eluent itself as the background and is comprehended as an superposed signal that comprises contributions of ion species in the sample. The suppressor converts a salt or base in the eluent to an acid or the like having a lower degree of dissociation to thereby decrease the background electrical conductivity and as a result improves the measurement sensitivity of signals attributable to the ion species of the sample.

Because of its high sensitivity, the suppressor method is indispensable to the management of pure water, chemicals and the like for use in the semiconductor art, though a dedicated apparatus is necessary and the profitability is inferior as compared with the non-suppressor method.

The anion exchanger used in the suppressor method is required to be stable at a relatively high pH (a pH on the order of from 9 to 12) and have a capability of successfully separating the objective anion. Specifically, the anion exchanger includes so-called pellicular-type ion exchanger obtained by coating an anion exchangeable latex on a sulfonated polystyrene substrate, and a porous chemical bond-type ion exchanger obtained by chemical-bonding a quaternary ammonium group to a porous polymer substrate, particularly an acrylate polymer substrate. Among these, the former ion exchanger has excellent alkali resistance and is being used on the greatest occasions. In the case of the latter ion exchanger, commercially available products at present are not sufficiently high in the alkali resistance and these are now scarcely used in the suppressor method but are used in many cases in the non-suppressor method mainly using an acidic eluent.

The pellicular-type ion exchanger restricts the migration of ions only to the surface of the packing and does not allow their entering into pores. Therefore, this ion exchanger is advantageous in that (1) the diffusion is almost prevented from occurring and (2) the ion does not interfere with the substrate. However, this ion exchanger is disadvantageous in that the usable surface area of the packing is limited in view of the structure and the column efficiency disadvantageously has a bound. For elevating the column efficiency of the pellicular-type ion exchanger, it is necessary to increase the column length or to reduce the particle size of the packing. However, the column used at present already has a large length of 250 mm and a more increase in the column length is not practical. With respect to the reduction in the particle size, even the packing having a particle size of about 5 μm, which is commonly used in the high-performance liquid chromatography, is very difficult to manufacture due to the limitation in view of the structure. Therefore, the pellicular-type ion exchanger cannot satisfy the requirement to have higher performance than the current theoretical plate number of 6,000 plates/column.

On the other hand, the porous chemical bond-type ion exchanger is excellent in the effective surface area of the packing because the ion migrates into pores to undertake the ion exchange. Therefore, this ion exchanger has a possibility of achieving higher performance. Although the porous chemical bond-type ion exchanger has a problem in that the peak is broadened due to the interference between the objective ion and the substrate, this broadening of the peak may be reduced by the manufacturing method described in JP-A-62-79356 (the term "JP-A" as used herein means an "unexamined published Japanese patent application"), where a spacer is introduced into the substrate and thereafter an ion exchange group is introduced. However, the porous chemical bond-type ion exchangers known at present cannot show sufficiently high alkali resistance at a pH of 9 or more and also lack the strength large enough to reduce the particle size and thereby achieve high performance.

In the analysis of anion using ion chromatography, the carbon dioxide gas contained in the sample is also detected as hydrogencarbonate ion. Therefore, in order to reduce the effect thereof to a minimum, a mixed aqueous solution of sodium carbonate and sodium hydrogencarbonate is widely used. However, in the analysis of trace components of a ppb level or less, hydrogencarbonate ion appears as a broad peak while overlapping with the peak of the objective ion to be analyzed and hence the objective ion is difficult to separate and quantitate. This broad peak appears as a recession or a projection from the base line depending on the concentration of the carbonate buffer solution used as the eluent and this recession or projection is called a carbonate dip or carbonate system peak (hereinafter referred to as a "carbonate dip").

The anion exchanger heretofore used mainly for the suppressor system column includes the above-described two kinds of ion exchangers, namely, a pellicular-type ion exchanger obtained by coating an anion exchangeable latex on a sulfonated polystyrene substrate and a porous chemical bond-type ion exchanger obtained by introducing an anion exchange group into a polyvinyl alcohol substrate. These two kinds of ion exchangers greatly differ in the hydrogencarbonate ion-holding ability because of the difference in the hydrophilicity of the substrate. However, whichever ion exchanger is used, a technique for manufacturing a column capable of controlling the appearance position of carbonate dip on the chromatogram has not yet been established. Thus, a problem arises at the time of microanalysis.

In order to avoid this problem, a manufacturing method of producing a copolymer of a styrene-type monomer having high hydrophobicity and an alcohol-type monomer having high hydrophilicity with controlling the ratio of each monomer mixed, thereby controlling the appearance position of carbonate dip, has been proposed as disclosed in JP-A-9-124729. However, the ion exchanger produced by this method shows a nitrate ion peak having a very bad shape with extreme tailing. The peak shape is evaluated based on the value (Fas) obtained by drawing a perpendicular line from the top of the chromatogram peak obtained, determining the horizontal widths in the right and in the left, respectively, of the peak from the perpendicular line at 10% of the peak height, and dividing the right width by the left width. In general, the chromatogram peak is almost bilaterally symmetric and accordingly, the Fas is in the vicinity of 1.0. However, in the case of the ion exchanger obtained by the method of the above-described publication, the Fas is 5.0 and by far larger. Thus, the quantitation of nitrate ion is not practical and the ion seeds eluting after the nitrate ion are also adversely affected. Therefore, this ion exchanger is not suitable for the microanalysis.

In the anion analysis using ion chromatography, it is ideal that the 7 standard inorganic anions be separated with a good balance in an analysis time as short as possible. However, fluoride ion is difficult to be held by the anion exchanger in the separation column and passes fast through the column. As a result, separation between the signal peak by the fluoride ion and water dip (negative peak appearing due to dilution of eluent by the injection of a sample) is insufficient so that the precision of quantitation tends to be deteriorated.

It would be advisable to use an eluent having a weak eluting power in order to increase with time in of fluoride ion. In this case, the elution time for divalent or more anions (sulfate ion and phosphate ion) is very long to make the analysis time redundant. In particular, where the eluent is alkaline, this problem is severe. For this reason, to simultaneously analyze fluoride ion and a divalent or more anion, the analysis conditions must be sophisticated.

Hence, a method for avoiding the above problems by optimization of the composition of eluent is being studied. For example, in the non-suppressor method, a method is proposed in which boric acid is added to the moving phase, which is weakly acidic and the boric acid and fluoride ion are allowed to selectively react to form an anionic compound,

thereby increasing the holding ability as disclosed in JP-B-7-37972 (the term "JP-B" as used herein means an "examined Japanese patent publication"). On the other hand, in the suppressor method, where a mixed solution of sodium carbonate and sodium hydrogencarbonate is used as an eluent, it has been known that varying the ratio of components can increase the holding ability of fluoride ion. Furthermore, a suppressor method in which a boric acid salt compound is added has been proposed as disclosed in JP-A-2000-180429. Thus, where the eluent can be constituted by a plurality of components, the above problems can be coped with by varying the composition thereof.

However, hydroxide base eluents such as aqueous sodium hydroxide solution and aqueous potassium hydroxide solution used as the eluent for a suppressor method are usually composed of a single component, so that the problems attributable to the eluent cannot be avoided. Therefore, in the suppressor method using such an alkaline eluent, a special technique must be used in order to make compatible the increase in the holding ability of fluoride ion and shortening of elution time for divalent or more anions (in particular phosphate ion among the 7 standard inorganic anions).

There have conventionally been practiced two methods. One is a gradient analysis method in which a concentration gradient is made in the eluent and another is a method in which the ion exchange capacity of the ion exchanger to be packed in the column is set to a greater value and a high concentration eluent as high as about 40 mM is used.

However, the first method is disadvantageous in that in order to impart the concentration gradient, it is necessary to provide at least two kinds of liquids having different concentrations and use an apparatus and operation for sucking and mixing them by means of two pumps and that a stabilization time during which the concentration of the eluent is returned to the original one for each measurement. The second method is disadvantageous in that because of the high concentration of eluent, the suppressor apparatus using an ion exchange membrane of a continuous regeneration type widely used at present requires application of high voltage for electrodialysis, which shortens the lifetime of suppressor.

When analyzing city water by a suppressor method using a hydroxide base eluent, not only improvement in the ability of holding fluoride ion and shortening of elution time for phosphate ion must be balanced but also sufficient separation of chloride ion and nitrite ion must be achieved at the same time. This is because in the analysis of city water, it is necessary to analyze nitrite ion on the order of several ppb in the presence of chloride ion on the order of several tens ppm. In the conventional column used for hydroxide base eluents, separation of chloride ion and nitrite ion is insufficient or carbonate ion is eluted during the separation if the separation is sufficient so that the analysis of trace amounts of nitrite ion is difficult to achieve at the same time.

JP 77035779A (abstract) discloses macroporous anion exchangers prepared form a styrene-based base copolymer and reaction with dimethylamine.

EP 0 066 165 A1 discloses a porous activated gel comprising vinyl alcohol monomer units and crosslinkable monomer units , having bound thereto an organic substance which can be an amino group.

Under the circumstances, an object of the present invention is to provide a porous polymer particle for suppressor system ion chromatography, an anion exchanger comprising the particle, and a producing method thereof, where the particle is stable at high pH and favored with high-strength, which is capable of restricting elution time for phosphate ion to a short time on the order of from ten and several minutes to 30 minutes using a low concentration (for example, 20 mM or less) eluent without using gradient analysis, i.e., under isocratic conditions where the concentration is constant, sufficiently separating fluoride ion, which is difficult to hold, from water dip, and sufficiently separating chloride ion and nitrite ion to control the appearance position of carbonate dip not to overlap with the position of other ion peaks.

## SUMMARY OF THE INVENTION

The present invention relates to the following porous polymer particle, anion exchanger for anion analyzing liquid chromatography, producing method thereof, and packing material for anion chromatography.

1) Alkali-resistant, high-strength porous polymer particle obtained by reacting a polyvinyl alcohol-base copolymer obtained by saponifying a part of the ester bonds in the copolymer of a carboxylic acid vinyl ester and an isocyanurate-base crosslinking monomer in an alkaline solution to convert into a hydroxyl group or hydroxyl groups, with a compound having two or more glycidyl groups in the molecule to introduce a glycidyl group-containing group such that the mass after the reaction is 103 to 140 assuming that the mass of the polyvinyl alcohol-base copolymer is 100 and then reacting the product with a nitrogen-containing compound in order to introduce a group having a quaternary ammonium structure.

2) The porous polymer particle as described in 1) above, wherein the group containing a quaternary ammonium structure is derived from a group selected from trialkylamine, dialkylalkanolamine, N-alkyldialkanolamine, trialkanolamine, and aromatic or non-aromatic nitrogen-containing heterocyclic compounds.

3) The porous polymer particle as described in 2) above, wherein the aromatic or non-aromatic nitrogen-containing heterocyclic compound is a compound selected from the group consisting of a pyridine compound represented by formula (1)

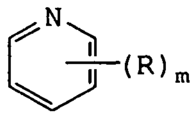

(1)

(wherein R represents an alkyl or alkoxy group having 1 to 5 carbon atoms, which is optionally substituted with a hydroxyl group or a halogen atom, or a halogen atom, and m is an integer of 0 to 5, provided that when m is 2 or more, plural R's may be the same or different),
a 1-alkylpyrrolidine compound represented by formula (2)

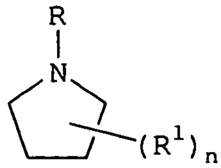

(2)

(wherein R represents an alkyl group having 1 to 5 carbon atoms, which is optionally substituted with a hydroxyl group or a halogen atom, $R^1$ represents a hydroxyl group or an alkyl group or alkoxy group having 1 to 5 carbon atoms, which is optionally substituted with a hydroxyl group, and n is an integer of 0 to 2),
a 1-alkylpiperidine compound represented by formula (3)

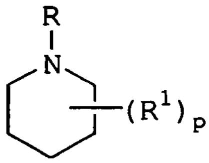

(3)

(wherein R represents an alkyl group having 1 to 5 carbon atoms, which is optionally substituted with a hydroxyl group or a halogen atom, $R^1$ represents a hydroxyl group or an alkyl group or alkoxy group having 1 to 5 carbon atoms, which is optionally substituted with a hydroxyl group, and p is an integer of 0 to 2), and
a 1,4-dialkylpiperazine compound represented by formula (4)

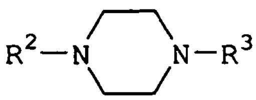

(4)

(wherein $R^2$ and $R^3$, which may be the same or different, independently represent a hydrogen atom, an alkyl group having 1 to 5 carbon atoms, which is optionally substituted with a hydroxyl group or a halogen atom, provided that $R^2$ and $R^3$ do not represent hydrogen atoms simultaneously).

4) The porous polymer particle as described in any one of 1) to 3) above, wherein the particle has a mean particle diameter of 1 to 30 μm.

5) The porous polymer particle as described in any one of 1) to 4) above, wherein the particle has a mean pore diameter of 50 to 300 Å.

6) An alkali-resistant, high-strength anion exchanger comprising the porous polymer particle as described in 1) above.

7) A method for producing an alkali-resistant, high-strength porous polymer particle, comprising reacting a polyvinyl alcohol-base copolymer obtained by saponifying a part of the ester bonds in the copolymer of a carboxylic acid vinyl ester and an isocyanurate-base crosslinking monomer in an alkaline solution to convert into a hydroxyl group or hydroxyl groups, with a compound having two or more glycidyl groups in the molecule to introduce a glycidyl group-containing group such that the mass after the reaction is 103 to 140 assuming that the mass of the polyvinyl alcohol-base copolymer is 100 and then reacting the product with a nitrogen-containing compound in order to introduce a group having a quaternary ammonium structure.

8) The method for producing an anion exchanger as described in 7) above, wherein the group containing a quaternary ammonium structure is derived from a group selected from trialkylamine, dialkylalkanolamine, N-alkyldialkanolamine, trialkanolamine, and aromatic or non-aromatic nitrogen-containing heterocyclic compounds.

9) The method for producing an alkali-resistant high-strength anion exchanger as described in 7) above, wherein the saponification of the polyvinyl alcohol-base polymer is carried out until from 0.5 to 5 meq/g of a hydroxyl group is generated in the polymer.

10) The method for producing an alkali-resistant high-strength anion exchanger as described in 7) or 9) above, comprising treating in an alkaline solution.

11) The method for producing an alkali-resistant high-strength anion exchanger as described in 10) above, wherein a carbonic acid salt solution is used as the alkaline solution.

12) Packingmaterial for ion chromatography comprising the anion exchanger as described in 6) above.

BRIEF DESCRIPTION OF THE DRAWINGS

Fig. 1 shows a basic construction of ion chromatography.

Fig. 2 is a chromatogram on the standard liquid (aqueous solution containing 2 mg/l $F^-$, 5 mg/l $Cl^-$, 10 mg/l $NO_2^-$ 10 mg/l $Br^-$, 10 mg/l $NO_3^-$, 10 mg/l $PO_4^{3-}$, and 10 mg/l $SO_4^{2-}$) by the ion exchanger-packed column of the present invention obtained in Example 1.

Fig. 3 is a chromatogram showing the relationship between the alkali treatment time and the anion retention time or the carbonate dip appearance position, obtained using the column of Example 6.

Fig. 4 is a chromatogram of an aqueous solution containing $F^-$(2 μg/l), $Cl^-$ (3 μg/l), $NO_2^-$ (5 μg/l), $Br^-$ (10 μg/l), $NO_3^-$ (10 μg/l), $PO_4^{3-}$ (15 μg/l), $SO_4^{2-}$ (15 μg/l) by the column of Example 3.

Fig. 5 is a chromatogram obtained by injecting a test aqueous solution containing 7 standard ions in a separation column obtained by packing the ion exchanger of the present invention obtained in Example 7.

Fig. 6 is a graph illustrating the relationships between the alkali treatment time and anion retention time in Example 13 and Comparative Example 6, respectively.

Fig. 7 is a graph illustrating the relationships between the alkali treatment time and anion retention time in Example 14 and Comparative Example 7, respectively.

Fig. 8 is a graph illustrating the relationships between the alkali treatment time and anion retention time in Example 15 and Comparative Example 8, respectively.

MODE FOR CARRYING OUT THE INVENTION

The present invention relates to a porous polymer particle that is useful as an alkali-resistant, high-strength anion exchanger obtained by reacting a polyvinyl alcohol-base copolymer obtained by saponifying a part of the ester bonds in the copolymer of a carboxylic acid vinyl ester and an isocyanurate-base crosslinking monomer in an alkaline solution to convert into a hydroxyl group or hydroxyl groups, with a compound (spacer molecule) having two or more glycidyl groups in the molecule to introduce a glycidyl group-containing group such that the mass after the reaction is 103 to 140 assuming that the mass of the polyvinyl alcohol-base copolymer is 100 and then reacting the product with a nitrogen-containing compound that is derived into a group having a quaternary ammonium structure as well as to an alkali-resistant and high-strength anion exchanger comprising the particles.

Suitable examples of the isocyanurate-type cross-linking monomer which can be used in the present invention include cross-linking monomers having a isocyanurate ring represented by the following formula (5):

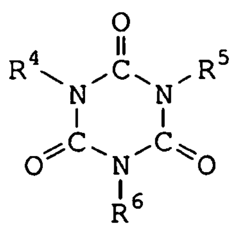

(5)

wherein the symbols have the same meanings as defined above. Among these, triallylcyanurate corresponding to the formula (5) where $R^4$, $R^5$ and $R^6$ all are $-CH_2CH=CH_2$ is preferred as a cross-linking agent because of its good copolymerizability with vinyl acetate and high stability against the saponification.

In the production of a polyvinyl alcohol-type copolymer, a method of reacting a cross-linking agent with wholly porous polyvinyl alcohol particles is generally used. For example, a porosity-imparting agent such as butyl acetate, and a radical polymerization initiator are added to divinyl adipate and the mixture is suspension-polymerized in water and then reacted in methanol to produce a hydroxyl group, thereby obtaining polyvinyl alcohol particles. Thereafter, the polyvinyl alcohol is reacted and cross-linked with epichlorohydrin in a solution containing acetone and dimethyl sulfoxide to obtain a desired substrate.

However, in order to obtain a substrate having higher strength, a method of saponifying a copolymer of a carboxylic acid vinyl ester and a cross-linking monomer having an isocyanurate ring to convert a part of the ester groups in the copolymer into a hydroxyl group (see, JP-B-63-61619) may be used. In the present invention, the anion exchanger having high-strength and alkali-resistance is obtained using a method of saponifying a copolymer of a carboxylic acid vinyl ester and a cross-linking monomer having an isocyanurate ring represented by formula (5) to convert a part of the ester groups in the copolymer into a hydroxyl group. In this method, the hydroxyl group has a role of elevating the hydrophilicity of the substrate and inhibiting the interference with ion and at the same time plays a part as an active site necessary for the reaction with a glycidyl compound which is one constituent component of the present invention.

In the present invention, for sufficiently introducing the glycidyl group-containing group, the saponification is preferably performed to a hydroxyl group density of 0.5 to 5 meq/g. After the saponification, the hydroxyl group is preferably present in a density of 1.0 to 3 meq/g. If the hydroxyl group density is less than 0. 5 meq/g, the necessary glycidyl group-containing group is disadvantageously difficult to introduce, whereas if the saponification is performed to exceed 5 meq/g, the strength of the substrate decreases, therefore, the particle size of the substrate cannot be reduced to improve the performance and this is not preferred.

The term "carboxylic acid vinyl ester" as used in the present invention means a compound having one or more polymerizable carboxylic acid vinyl ester group. Examples thereof include vinyl acetate, vinyl propionate, vinyl butyrate, vinyl valerate and vinyl pivalate. These are used individually or in combination of two or more thereof. Among these, preferred are vinyl acetate and vinyl propionate which are relatively hydrophilic and facilitated in the polymerization and saponification.

In the present invention, for obtaining a copolymer comprising a cross-linking monomer, an ordinary polymerization method such as suspension polymerization, bulk polymerization and emulsion polymerization, may be used.

In the present invention, the glycidyl group-containing group introduced into the polyvinyl alcohol-base copolymer is a group capable of acting as a spacer for introducing a so-called ion exchange group, and thereby exhibiting a function of elongating the distance between the substrate and the ion exchange group, preventing the interference between the ion and the substrate and inhibiting the diffusion of the peak.

Examples of the reagent for introducing the glycidyl group-containing group include epichlorohydrin, 1,4-butanediol diglycidyl ether, ethylene glycol diglycidyl ether and glycerin diglycidyl ether. In order to obtain the alkali-resistant anion exchanger of the present invention, a compound containing two or more glycidyl groups in the same molecule, such as 1, 4-butanediol diglycidyl ether, must be reacted.

An increase in mass after the reaction with the glycidyl compound is from 103 to 140 assuming that the mass of the polyvinyl alcohol is 100. If the increase in mass is less than 103, insufficient alkali resistance disadvantageously results, whereas if it exceeds 140, the particle may become soft or the particles may be associated with each other, and this is not preferred. The increase in mass after the reaction with the glycidyl compound is preferably from 104 to 135, more preferably from 105 to 125.

As the glycidyl group-containing group for use in the present invention, for example, a group represented by formula (6) is used.

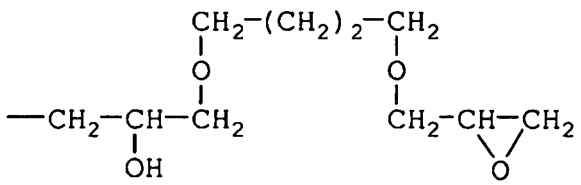

(6)

In the present invention, the compound to be reacted with the glycidyl group-containing group for introducing the quaternary ammonium structure is usually selected from tertiary amines, such astrialkylamines, dialkylalkanolamines, N-alkyldialkanolamines, trialkanolamines and aromatic or non-aromatic nitrogen-containing heterocyclic compounds.

Here, the trialkylamine includes, for example, trimethylamine, tributylamine, triethylamine, tripropylamine and the like. The dialkylalkanolamine includes 2-dimethylaminoethanol, 2-diethylaminoethanol and the like. The N-alkyldialkanolamine includes N-methyldiethanolamine, N-ethyldiethanolamine and the like. The trialkanolamineincludes triethanolamine, triisopropanolamine and the like.

Further, the aromatic or non-aromatic nitrogen-containing heterocyclic compound includes a compound selected from the group consisting of a pyridine compound represented by formula (1)

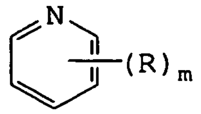

(1)

(wherein R represents an alkyl or alkoxy group having 1 to 5 carbon atoms, which is optionally substituted with a hydroxyl group or a halogen atom, or a halogen atom, and m is an integer of 0 to 5, provided that when m is 2 or more, plural R's may be the same or different),
a 1-alkylpyrrolidine compound represented by formula (2)

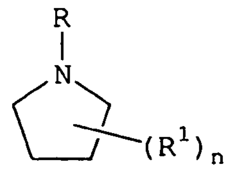

(2)

(wherein R represents an alkyl group having 1 to 5 carbon atoms, which is optionally substituted with a hydroxyl group or a halogen atom, $R^1$ represents a hydroxyl group or an alkyl group or alkoxy group having 1 to 5 carbon atoms, which is optionally substituted with a hydroxyl group, and n is an integer of 0 to 2),
a 1-alkylpiperidine compound represented by formula (3)

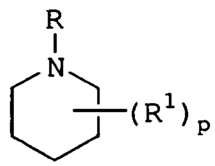

(3)

(wherein R represents an alkyl group having 1 to 5 carbon atoms, which is optionally substituted with a hydroxyl group or a halogen atom, $R^1$ represents a hydroxyl group or an alkyl group or alkoxy group having 1 to 5 carbon atoms, which is optionally substituted with a hydroxyl group, and p is an integer of 0 to 2), and
a 1,4-dialkylpiperazine compound represented by formula (4)

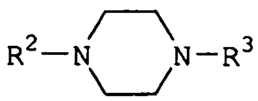

(4)

(wherein $R^2$ and $R^3$ which may be the same or different, independently represent a hydrogen atom, an alkyl group having 1 to 5 carbon atoms, which is optionally substituted with a hydroxyl group or a halogen atom, provided that $R^2$ and $R^3$ do not represent hydrogen atoms simultaneously).

Specific examples thereof include pyridine, 2-methylpyridine, 3-methylpyridine, 4-methylpyridine, 2-hydroxy-4-methylpyridine, 2-hydroxy-6-methylpyridine, 2-hydroxypyridine, 3-hydroxypyridine, 4-hydroxypyridine, 1-methylpyrrolidine, 1-ethylpyrrolidine, 1-methylpiperidine, 1-ethylpiperidine, 1-(2-hydroxethyl)piperidine, 1-(hydroxymethyl)piperidine, 1-(2-hydroxyethyl)pyrrolidine, 2-(2-hydroxyethyl)-1-methylpyrrolidine, 3-hydroxy-3-methylpiperidine, 4-hydroxy-1-methylpiperidine, 4-chloro-1-methylpiperidine, 1-(2-chloroethyl)piperidine, 1-(2-chloroethyl)pyrrolidine, 1-methylpiperazine, 1-ethylpiperazine, or 1,4-dimethylpiperazine.

As specific examples thereof, there can be utilized tertiary amines such as trimethylamine, triethylamine, tributylamine, diethylethanolamine, N-ethyldiethanolamine, 1-methylpiperidine, 1-methylpyrrolidine, pyridine and methylpyridine. These tertiary amines differ from each other in the reactivity and also in the selectivity of ion that is intended to separate. Generally, a tertiary amine having good reactivity and capable of eluting the ion as much as possible within a short time is selected. In the present invention, trimethylamine, diethylethanolamine, 1-methylpiperidine, and 1-methylpyrrolidine are preferred, with 1-methylpiperidine and 1-methylpyrrolidine being particularly preferred.

The anion exchanger of the present invention can be obtained by the above-described producing methods.

In another embodiment, the method for producing an anion exchanger according to the present invention is characterized in that a known anion exchanger is reacted in an alkaline solution to change the affinity of the substrate for the hydrogencarbonate ion, whereby the ion exchange capacity and the hydrophilicity of the substrate can be freely controlled so as to elute the carbonate dip at the position not overlapping with other anion peaks.

Examples of the alkaline solution which can be used in the present invention include a single or mixed solution of a hydroxide such as sodium hydroxide and potassium hydroxide, or a carbonate such as sodium hydrogencarbonate, sodium carbonate, potassium hydrogencarbonate or potassium carbonate.

The reaction is usually performed in an alkaline solution of 0.1 to 10 M at a temperature of 50°C to 120°C approximately for 1 to 40 hours, however, it is also possible to set the concentration of the alkaline solution, the reaction temperature or the reaction time out of these normal ranges.

The anion exchanger used for the modification is not particularly limited. In the present invention, the above-described alkali-resistant high-strength anion exchanger is used.

The anion exchanger obtained in the present invention suitably has a particle diameter of from 1 to 30 μm, preferably from 2 to 20 μm, more preferably from 2 to 10 μm. If the particle diameter of the anion exchanger exceeds 30 μm, the theoretical plate number of the column disadvantageously decreases, whereas if the particle size is less than 1 μm, the column pressure excessively elevates and the filling becomes extremely difficult. Therefore, this is not preferred.

In the present invention, the particle diameter is measured by a Coulter Counter.

The anion exchanger obtained by the present invention is a porous polymer particle and the pore diameter is controlled using a method commonly used for the packing for high performance liquid chromatography. The pore diameter of the porous polymer particle is from 50 to 300 Å, preferably from 50 to 150 Å, more preferably from 50 to 100 Å. If the pore diameter of the porous polymer particle is less than 50 Å, the surface area is small and the glycidyl group-containing group is difficult to introduce. Therefore, this is not preferred. On the other hand, if it exceeds 300 Å, the strength of the particle disadvantageously decreases.

The pore diameter can be determined by the technique described in J. Chromedogr. 387 (1987) 65 of reverse size exclusion chromatography, a BET (Brunauer-Emmett-Teller) method. In the present invention, pore diameter is measured according to the method described in Angw. Chem. Int. Ed. Engl., 17, 901-908 (1987), unless there is a problem specially.

Upon the measurement, first the particles to be measured are filled in a column, which then is connected to an HPLC apparatus and plural standard polystyrenes over a wide range of molecular weight and benzene are each measured of retention volume (ml) using THF (tetrahydrofuran) as an eluent. The results obtained are plotted on a graph calibrated by molecular weight M on Y-axis (use of logarithmic graduation will be helpful for viewing at a sight) vs. retention volume (ml) on X-axis. The curve smoothly connecting the plotted points thus obtained is called a calibration curve. From the calibration curve, exclusion bound ($V_1$, $M_1$) are obtained by a conventional method. Using these points and measured points of benzene ($V_2$, 78), a line $X=(V_1 + V_2)/2$ is plotted on a graph. Then, the coordinate Y, $M_m$, of the intersection of this straight line and calibration curve (hereinafter called "mean pore point") is read and this value is introduced into the following equation (X) to calculate a mean pore point $\phi_m$ (Å)

$$\phi_m = 0.62\times(M_m)^{0.59} \qquad (X)$$

The "mean pore point" above is defined by the present inventors and means the point at which the accumulated volume from the minimum volume (the size in which benzene is just fitted in) is 50%, assuming the total pore volume is 100%. The above equation is used for converting the standard polystyrene equivalent molecular weight at this point to the diameter of a pore in which the standard polystyrene is just fitted in.

The anion exchanger obtained in the present invention is filled into a column in accordance with a known filling method such as slurry method, to provide an alkali-resistant and high-sensitive column for suppressor system ion

chromatography.

The column using the anion exchanger of the present invention is stable against the eluent used in the suppressor system ion chromatography. Particularly, the column is stable also when the eluent having a pH of 9 to 12 used in the alkali side is at least one selected from the group consisting of a carbonate buffer, a borate buffer, an aqueous sodium hydroxide solution and an aqueous potassium hydroxide solution.

The column using the anion exchanger of the present invention can also be used by adding an organic solvent to the eluent in a concentration of 50 mass% or less and in this case, the elution time of hydrophobic anion may be reduced or the separation balance among respective ions may be easily controlled.

The organic solvent used is not particularly limited as long as it is a solvent commonly used in the eluent for suppressor system ion chromatography. Examples thereof include acetone, acetonitrile, methanol, ethanol, isopropanol, glycerol and tetrahydrofuran. Among these, acetone, acetonitrile, methanol and the like are preferred.

The column filled with the anion exchanger of the present invention can attain good separation of main inorganic anions such as phosphate ion, fluoride ion, chloride ion, nitrite ion, bromide ion, nitrate ion and sulfate ion, and organic acid ions such as acetate ion, formate ion, methacrylate ion and oxalate ion, by appropriately selecting the exchange capacity of the ion exchanger and the concentration of the eluent.

Examples of the use of the column for suppressor system ion chromatography of the present invention include analysis of trace components in the environment such as air (trace sour gas, acid rain and the like), water (river water, tap water, spa water, limnetic water, drainage, and the like) and soil (anions in soil extract solution and the like) ; analysis of food, such as analysis of $BrO_3$ ion in bread; analysis of $PO_4$ ion, fertilizer or the like in plant; analysis of anion in cosmetic starting material; analysis of anion in coating raw material, coating material or surface finishing solution; analysis of ultrapure water, mixed acid, air, lead frame, wafer or the like in the semiconductor field; quality control in the pharmaceutical field; and analysis of circulating water, cooling water or the like at the electric power plant.

Furthermore, the column for suppressor system ion chromatography of the present invention has a high theoretical plate number as compared with conventional columns and can separate even a component that cannot be heretofore separated. Therefore, the column is not limited to the above-described uses. Also, the column may be used in the electric material producing process for which high-sensitive analysis is required, even under the isocratic eluent conditions ready for the control of pollution in a clean room by organic acids such as acetic acid and formic acid, for the analysis of components contained in semiconductor washing or for the analysis of methacrylic acid or the like dissolved out from adhesives.

The anion exchanger and the column for suppressor system ion chromatography according to the second embodiment of the present invention have sufficiently high alkali resistance against the eluent used in the suppressor system ion chromatography. Furthermore, since the anion exchanger has high-strength and can be reduced in the particle size, the column using the anion exchanger can attain a theoretical plate number as high as twice or more the theoretical plate number of conventional anion exchange columns for ion chromatography.

By using the producing method of the anion exchanger of the present invention, an anion analysis column for suppressor system ion chromatography can be produced, which can freely control the carbonate dip position. When this column is used, the effect of the carbonate dip can be eliminated at the analysis of trace components, so that the separation/quantification of the objective ion can be easily performed.

The column for suppressor system ion chromatography, packed with the anion exchanger of the present invention can restrict the elution time of phosphate ion in 20 minutes under isocratic conditions using a low concentration hydroxide-base eluent of 20 mM or less, sufficiently separate fluoride ion, which is difficult to retain, from water dip and sufficiently separate chloride ion and nitrite ion, so that it can shorten the measurement time in the analysis using the above eluent and prolong the lifetime of continuous-type and regeneration-type ion exchanger membrane suppressor.

Accordingly, the present invention is useful in the fields over the wide range, such as environment, food, agriculture, cosmetics, coating material, semiconductor, medicament and electric power. It is particularly useful in the case where analysis of several ppb nitrite ion in the presence of several tens ppm chloride ion is required as in city water analysis.

## BEST MODE FOR CARRYING OUT THE INVENTION

Hereinafter, the present invention will be described in detail by examples. However, they are merely exemplary and the present invention should not be construed as being limited thereto.

### Example 1

A uniformly mixed solution containing 100 g of vinyl acetate, 180 g of triallyl isocyanurate, 150 g of butyl acetate and 10 g of 2,2'-azobis(isobutyronitrile), and 1,400 ml of water having dissolved therein a small amount of polyvinyl alcohol and sodium phosphate were charged into a 51-volume three-neck flask equipped with a reflux condenser and

the resultingmixed solution was stirred for 10 minutes. Subsequently, while stirring under nitrogen stream, polymerization was performed at 60°C for 16 hours to obtain a particulate polymer. This polymer was filtrated, washed, extracted with acetone, dried, charged together with 3 1 of caustic soda into a 5 1-volume three-neck flask equipped with a reflux condenser, a nitrogen inlet tube and a stirrer, and saponified while stirring at 15°C for 20 hours under nitrogen stream. The resulting polymer was again filtered, washed and dried. In the polyvinyl alcohol copolymer obtained by the saponification, the density of hydroxyl group was 2.1 meq/g. Using this as a substrate, an anion exchanger was produced through the following procedure.

Into 2 1-volume three-neck flask equipped with a nitrogen inlet tube and a stirrer, 100 g of the dry polymer obtained above, 50 g of 1, 4-butanediol diglycidyl ether (hereinafter referred to as "1,4-BGE") and 1,000 ml of dimethyl sulfoxide were charged. The resulting mixture was stirred at 35°C for 16 hours under nitrogen stream to introduce a glycidyl group-containing group into the polymer substrate. After the introduction, the polymer was washed with dimethyl sulfoxide and water and then dried by a vacuum dryer. The mass of the dried polymer was 104 g and thus, the increment from the original substrate was 4%.

Into a 2 1-volume three-neck flask equipped with a nitrogen inlet tube and a stirrer, 100 g of the polymer having introduced thereinto a glycidyl group-containing group, 60 ml of a 1% aqueous triethylamine solution and 1,000 ml of water were charged. The resulting solution was stirred at 50°C for 4 hours under nitrogen stream to introduce an amine group, thereby preparing an anion exchanger. This anion exchanger was washed with methanol, 1N hydrochloric acid and 1N caustic soda, by providing intervention of water washing between respective washing operations. Thereafter, the anion exchanger was immersed in 0.5 M sodium carbonate and treated at 60°C for 5 hours, followed by water washing and drying. The thus-obtained anion exchanger had a particle diameter of 5 $\mu$m and an ion exchange capacity of about 50 $\mu$eq/g.

The anion exchanger obtained above was filled in a polyether ether ketone resin (PEEK)-made column having an inside diameter of 4.6 mm and a length of 150 mm to prepare an anion exchange column.

Using MIC-20 (manufactured by Metrohm Ltd.) equipped with a suppressor as the ion chromatograph, 30 $\mu$l of an aqueous solution containing 2 mg/l of $F^-$, 5 mg/l of $Cl^-$, 10 mg/l of $NO_2^-$ 10 mg/l of $Br^-$, 10 mg/l of $NO_3^-$, 10 mg/l of $PO_4^{3-}$ and 10 mg/l of $SO_4^{2-}$ was injected as a standard solution into the ion chromatograph while passing though 3 mM sodium carbonate as the eluent at 1.0 ml/min.

Fig. 2 shows the chromatogram obtained. The theoretical plate number of this column was calculated from the peak of $SO_4^{2-}$ ion and found to be 12,000 plates.

This was as high as about two times as compared with commercially available pellicular system ion exchange columns now being used most widely.

In order to examine the durability of this column, the chromatogram was recorded by continuously passing the above-described eluent at 1.0 mg/l and injecting the above-described standard solution at regular intervals to monitor the change in the column performance. When the eluent was passed for 500 hours, the fluctuation in the retention time of each ion was from 2 to 3% so that sufficiently high practical utility was revealed.

Example 2

Into a 21-volume three-neck flask equipped with a nitrogen inlet tube and a stirrer, 100 g of the polyvinyl alcohol polymer prepared in Example 1 was charged as the substrate together with 100 g of 1, 4-BGE and 1, 000 ml of dimethyl sulfoxide. The resulting mixture was stirred at 35°C for 16 hours under nitrogen stream to introduce a glycidyl group-containing group into the polymer substrate. After the introduction, the polymer was washed with dimethyl sulfoxide and water, and then dried by a vacuum dryer. The mass of the dried polymer was 108 g, thus, the increment from the original substrate was 8%.

According to the same formulation as in Example 1, 100 g of the polymer having introduced thereinto a glycidyl group-containing group prepared above was aminated. The anion exchanger obtained (ion exchange capacity: 50 $\mu$eq/g) was filled into the same column as used in Example 1. The thus-obtained separation column had a theoretical plate number ($SO_4^{2-}$) of 11, 500 and in the eluent passing test for 500 hours, almost no fluctuation occurred in the retention time of each ion. Therefore, good durability was revealed.

Example 3

An anion exchanger was prepared according to the same formulation as in Example 1 except for changing the amount of 1, 4-BGE to 450 g, and using this, an anion exchange column was manufactured. The increment due to the introduction of a glycidyl group-containing group was 35%. Using this column, a chromatogram was collected, after injecting 100 $\mu$l of an aqueous solution containing 2 $\mu$g/l of $F^-$ ion, 3 $\mu$g/l of $Cl^-$ ion, 5 $\mu$g/l of $NO_2^-$ ion, 10 $\mu$g/l of $Br^-$ ion, 10 $\mu$g/l of $NO_3^-$ ion, 15 $\mu$g/l of $PO_4^{3-}$ ion and 15 $\mu$g/l of $SO_4^{2-}$ ion. Fig. 4 shows the obtained chromatogram.

The thus-obtained column had a theoretical plate number ($SO_4^{2-}$) of 12,000 and in the eluent passing test for

500 hours, almost no fluctuation occurred in the retention time of each ion.

Example 4

An anion exchanger was prepared according to the same formulation as in Example 1 except for using 300 g of glycerol diglycidyl ether (hereinafter referred to as "GDE") as a reagent for the introduction of a glycidyl group-containing group and performing the reaction for 6 hours. Using this, an anion exchange column was manufactured. The increment due to the introduction of a glycidyl group-containing group was 25%, the theoretical plate number ($SO_4^{2-}$) of the column obtained was 10, 500 and in the eluent passing test for 500 hours, almost no fluctuation occurred in the retention time.

Comparative Example 1

An anion exchanger was prepared according to the same formulation as in Example 1 except for changing the amount of 1,4-BGE to 20 g, and using this, an anion exchange column was manufactured. The increment due to the introduction of a glycidyl group-containing group was 2%, the theoretical plate number ($SO_4^{2-}$) of the column obtained was 12,000. In the eluent passing test for 500 hours, the fluctuation in the retention time was 50%. Thus, this anion exchange column had no practical utility as a suppressor system anion column.

Comparative Example 2

An anion exchanger was prepared according to the same formulation as in Example 1 except for changing the amount of 1, 4-BGE to 550 g, and using this, an anion exchange column was manufactured. The increment due to the introduction of a glycidyl group-containing group was 45%. However, association of anion exchanger particles with each other occurred and the theoretical plate number of the packed anion exchange column was 1, 500 ($SO_4^{2-}$). Thus, this column had no practical utility as a suppressor system anion column.

Comparative Example 3

An anion exchanger was prepared according to the same formulation as in Example 1 except for using 50 g of epichlorohydrin (hereinafter referred to as "EPCH") as a reagent for the introduction of a glycidyl group-containing group, and using this, an anion exchange column was manufactured. The increment due to the introduction of a glycidyl group-containing group was 5% and the theoretical plate number ($SO_4^{2-}$) of the anion exchange column obtained was 12, 500. However, when this column was subjected to an eluent passing test for 500 hours, the fluctuation in the retention time of each ion was 70%. Thus, this anion exchange column had no practical utility as a suppressor system anion column.

Comparative Example 4

An anion exchanger was prepared according to the same formulation as in Example 1 except for using 200 g of EPCH as a reagent for the introduction of a glycidyl group-containing group, and using this, an anion exchange column was manufactured. The increment due to the introduction of a glycidyl group-containing group was 15% and the theoretical plate number ($SO_4^{2-}$) of the anion exchange column obtained was 12,500. However, when this column was subjected to an eluent passing test for 500 hours, the fluctuation in the retention time of each ion was 70%. Thus, this anion exchange column had no practical utility as a suppressor system anion column.

The kind and amount of the reagent for the introduction of a glycidyl group-containing group, the increment (%) due to the introduction of a glycidylgroup-containing group, the theoretical plate number of the column, the results of fluctuation in the retention time of each ion when the eluent (3.5 mM $Na_2CO_3$) was passed for 500 hours, which were used and obtained in Examples 1 to 4 and Comparative Examples 1 to 4, are shown in Table 1.

Table 1

| | Amount of Glycidyl Group-Containing Group Introduced | | | Theoretical Plate Number of Column | Fluctuation of Retention Time at the Passing of Eluent for 500 Hours |
|---|---|---|---|---|---|
| | Reagent | Amount Used (g) | Amount Introduced (mass%) | | |
| Example 1 | 1,4-BGE | 50g | 4% | 12,000 | 2 to 3% |
| Example 2 | 1,4-BGE | 100g | 8% | 11,500 | almost none |

(continued)

| | Amount of Glycidyl Group-Containing Group Introduced | | | Theoretical Plate Number of Column | Fluctuation of Retention Time at the Passing of Eluent for 500 Hours |
|---|---|---|---|---|---|
| | Reagent | Amount Used (g) | Amount Introduced (mass%) | | |
| Example 3 | 1,4-BGE | 450g | 35% | 12,000 | almost none |
| Example 4 | GDE | 300g | 25% | 10,500 | almost none |
| Comparative Example 1 | 1 4-BGE | 20g | 2% | 12,000 | 50% |
| Comparative Example 2 | 1,4-BGE | 550g | 45% | 1,500 | - |
| Comparative Example 3 | EPCH | 50g g | 5% | 12,500 | 70% |
| Comparative Example 4 | EPCH | 200g | 15% | 12,500 | 70% |

It is seen that the column for ion chromatography using the anion exchanger of the present invention exhibits a theoretical plate number as high as about twice that of conventional columns and has sufficiently high durability against the passing of the eluent used in the suppressor system ion chromatography.

Example 5

Preparation of Anion Exchanger

Into a 2 1-volume three-neck flask equipped with a nitrogen inlet tube and a stirrer, 100 g of the polyvinyl alcohol polymer prepared in Example 1 was charged as a substrate together with 300 g of 1, 4-BGE and 1, 000 ml of dimethyl sulfoxide. The resulting mixture was stirred at 35°C for 12 hours under nitrogen stream to introduce a glycidyl group-containing group into the polymer substrate. After the introduction, the polymer was washed with dimethyl sulfoxide and water and then dried by a vacuum dryer. The mass of the dried polymer was 110 g, thus, the increment from the original substrate was 10%.

According to the same formulation as in Example 2, 100 g of the polymer having introduced thereinto a glycidyl group-containing group was aminated, and using this, an anion exchanger was produced.

Alkali Treatment

Into a 21-volume three-neck flask equipped with a stirrer, 100 g of the anion exchanger prepared above and 1,000 ml of 1M sodium carbonate were charged and treated at 98°C for from 1 to 6hours, followed by washing and drying, so as to modify the exchanger into various kinds of anion exchangers different in the appearance position of the carbonate dip.

Example 6

2.0 g of each anion exchanger prepared in Example 5 was dispersed in 10 ml of an aqueous 0.5M sodium chloride solution and filled under pressure into a polyether ether ketone resin (PEEK) -made column having an inside diameter of 4.6 mm and a length of 250 mm to manufacture an anion exchanger column.

The anion exchange columns manufactured above each was installed to an ion chromatograph and as an eluent, a mixed aqueous solution of 1.8 mM sodium carbonate and 1.7 mM sodium hydrogencarbonate was passed at 1.0 ml/min.

As a sample, 20 μl of an aqueous solution containing 2 mg/l of $F^-$ ion, 3 mg/l of $Cl^-$ ion, 5 mg/l of $NO_2^-$ ion, 10 mg/l of $Br^-$ ion, 10 mg/l of $NO_3^-$ ion, 15 mg/l of $PO_4^{3-}$ ion and 15 mg/l of $SO_4^{2-}$ ion was injected.

Fig. 3 shows the comparison of the retention time among various ions, obtained from the chromatograph of each column.

As shown in Fig. 3, when an alkali treatment is performed, the retention time of various anions becomes shorter,

however, since the appearance position of the carbonate dip comes out later, it can be seen that the appearance position of the carbonate dip can be controlled by controlling the alkali treatment conditions.

Example 7

As the substrate resin to which an ion exchange group was to be introduced, a polyvinyl alcohol-base polymer prepared by the following method was used. That is, a uniformly mixed solution containing 100 g of vinyl acetate, 180 g of triallyl isocyanurate, 150 g of butyl acetate and 10 g of 2,2'-azobis(isobutyronitrile), and 1,400 ml of water having dissolved therein a small amount of polyvinyl alcohol and sodium phosphate were charged into a 5 1-volume three-neck flask equipped with a reflux condenser and the resulting mixed solution was stirred for 10 minutes. Subsequently, while stirring under nitrogen stream, polymerization was performed at 60°C for 16 hours to obtain a particulate polymer. This polymer was filtrated, washed, extracted with acetone, and then dried.

The obtained polymer was charged together with 3 1 of 1N aqueous sodium hydroxide (NaOH) into a 51-volume three-neck flask equipped with a reflux condenser, a nitrogen inlet tube and a stirrer, and saponified while stirring at 15°C for 20 hours under nitrogen stream. Theresultingpolymerwasagainfiltered, washed and dried. In the polyvinyl alcohol copolymer obtained by the saponification, the density of hydroxyl group was 2.1 meq/g. Using this as a substrate, an anion exchanger was manufactured through the following procedure

Into 11-volume three-neck flask equipped with a nitrogen inlet tube and a stirrer, 100 g of the dry polymer obtained above, 300 g of 1, 4-BGE, 300 ml of dimethyl sulfoxide, and 65 ml of aqueous 30% by weight sodium hydroxide solution were charged. The resulting mixture was stirred at 35°C for 12 hours under nitrogen stream to introduce a glycidyl group-containing group into the polymer substrate. After the introduction, the polymer was washed with dimethyl sulfoxide and with water and then dried by a vacuum dryer. The mass of the dried polymer was 110 g and thus, the increment from the original substrate was 10%.

Into a 11-volume three-neck flask equipped with a nitrogen inlet tube and a stirrer, 100 g of the polymer having introduced thereinto a glycidyl group-containing group, 4 g of 1-methylpiperidine, and 500 ml of water were charged. The resulting solution was stirred at 40°C for 1 hour under nitrogen stream to introduce a tertiary heterocyclic amine group, thereby preparing an anion exchanger. This anion exchanger was washed with 1N hydrochloric acid and with 1N aqueous sodium hydroxide solution, by providing intervention of water washing between respective washing operations. Thereafter, the anion exchanger was immersed in 1N aqueous sodium hydroxide solution and treated at 60°C for 5 hours, followed by water washing and drying. The thus-obtained anion exchanger had a mean particle diameter of 5 μm and an ion exchange capacity of about 20 μeq/g.

The anion exchanger was filled in a polyether ether ketone resin (PEEK)-made column having an inside diameter of 4.0 mm and a length of 250 mm to prepare an anion exchange column. Using DX-320 (manufactured by Dionex Corporation) equipped with a suppressor as the ion chromatograph, 15 mM aqueous sodium hydroxide solution as the eluent was passed at 1.0 ml/min and 25 μl of an aqueous solution containing 2 mg/l of $F^-$, 3 mg/l of $Cl^-$, 5 mg/l of $NO_2^-$ 10 mg/l of $Br^-$, 10 mg/l of $NO_3^-$, 15 mg/l of $SO_4^{2-}$, and 15 mg/l of $PO_4^{3-}$ and was injected as a standard solution into the ion chromatograph at a column temperature of 35°C. Fig. 5 shows the chromatogram obtained.

Example 8

1,4-BGE was introduced to the polyvinyl alcohol-base resin prepared in Example 7 as a substrate in the same formulation as in Example 7.

100 g of the polymer having introduced therein to a glycidyl group-containing group, 10 g of 1-methylpyrrolidine, and 500 ml of water were charged in a 11-volume three-neck flask equipped with a nitrogen inlet tube and a stirrer and stirred at 40°C for 1 hour to introduce tertiary heterocyclic amine to the substrate to prepare an anion exchanger. This was washed with 1N hydrochloric acid and with 1N aqueous sodium hydroxide solution by providing intervention of water washing between respective washing operations. Thereafter, the anion exchanger was immersed in a 1N aqueous sodium hydroxide solution and treated at 60°C for 5 hours, followed by water washing and drying. The thus-obtained anion exchanger had a mean particle diameter of 5 μm and an ion exchange capacity of about 20 μeq/g.

The anion exchanger obtained as described above was filled in the same column as used in Example 7 and measurement was made in the same manner as in Example 7.

Example 9

1, 4-BGE was introduced to the polyvinyl alcohol-base resin prepared in Example 7 as a substrate in the same formulation as in Example 7.

100 g of the polymer having introduced therein to a glycidyl group-containing group, 10 g of pyridine, and 500 ml of water were charged in a 11-volume three-neck flask equipped with a nitrogen inlet tube and a stirrer and stirred

at 40°C for 1 hour to introduce tertiary heterocyclic amine to the substrate to prepare an anion exchanger. This was washed with 1N hydrochloric acid and with 1N aqueous sodium hydroxide solution by providing intervention of water washing between respective washing operations.
Thereafter, the anion exchanger was immersed in a 1N aqueous sodium hydroxide solution and treated at 60°C for 5 hours, followed by water washing and drying. The thus-obtained anion exchanger had a mean particle diameter of 5 μm and an ion exchange capacity of about 20 μeq/g.

The anion exchanger obtained as described above was filled in the same column as used in Example 7 and measurement was made in the same manner as in Example 7.

Example 10

1,4-BGE was introduced to the polyvinyl alcohol-base resin prepared in Example 7 as a substrate in the same formulation as in Example 7.

100 g of the polymer having introduced therein to a glycidyl group-containing group, 75 ml of aqueous 1% trimethylamine solution, and 500 ml of water were charged in a 1l-volume three-neck flask equipped with a nitrogen inlet tube and a stirrer and stirred at 40°C for 1 hour to introduce trimethylamine to the substrate to prepare an anion exchanger. This was washed with 1N hydrochloric acid and with 1N aqueous sodium hydroxide solution by providing intervention of water washing between respective washing operations. Thereafter, the anion exchanger was immersed in a 1N aqueous sodium hydroxide solution and treated at 60°C for 5 hours, followed by water washing and drying. The thus-obtained anion exchanger had a mean particle diameter of 5 μm and an ion exchange capacity of about 20 μeq/g.

The anion exchanger obtained as described above was filled in the same column as used in Example 7 and measurement was made in the same manner as in Example 7.

Example 11

1,4-BGE was introduced to the polyvinyl alcohol-base resin prepared in Example 7 as a substrate in the same formulation as in Example 7.

100 g of the polymer having introduced therein to a glycidyl group-containing group,150ml of aqueous 1% triethylamine solution, and 500 ml of water were charged in a 11-volume three-neck flask equipped with a nitrogen inlet tube and a stirrer and stirred at 40°C for 1 hour to introduce triethylamine to the substrate to prepare an anion exchanger. This was washed with 1N hydrochloric acid and with 1N aqueous sodium hydroxide solution by providing intervention of water washing between respective washing operations. Thereafter, the anion exchanger was immersed in a 1N aqueous sodium hydroxide solution and treated at 60°C for 5 hours, followed by water washing and drying. The thus-obtained anion exchanger had a mean particle diameter of 5 μm and an ion exchange capacity of about 20 μeq/g.

The anion exchanger obtained as described above was filled in the same column as used in Example 7 and measurement was made in the same manner as in Example 7.

Comparative Example 5

Using a commercially available column for hydroxide eluents (pellicular-type ion exchanger having introduced therein tertiary alkanolamine), measurement was performed in the same manner as in Example 7.

Evaluation:

Table 2 shows the kind of the tertiary amine introduced in Examples 7 to 11 and Comparative Example 5, the difference between retention time of fluoride ion and that of water dip, resolution between chloride ion and nitrite ion, and the retention time of phosphate ion. The difference between the retention time of fluoride ion and that of water dip was obtained by taking the top point of each peak as a retention time. The resolution between chloride ion and nitrite ion, R, was obtained according to the following equation.

$$R = 2 \times (t_2 - t_1)/(w_1 + w_2)$$

Where $t_1$ and $t_2$ represent each a retention time, and $w_1$ and $w_2$ represent each a peak width.

Table 2

| | Introduced tertiary amine | Difference between fluoride ion and water dip (minute) | Resolution between chloride ion and nitrite ion (R) | Retention time of phosphate ion (minute) |
|---|---|---|---|---|
| Example 7 | 1-Methylpiperidine | 1.00 | 5.2 | 15.6 |
| Example 8 | 1-Methylpyrrolidine | 0.95 | 5.0 | 15.2 |
| Example 9 | Pyridine | 0.90 | 5.0 | 15.8 |
| Example 10 | Trimethylamine | 0.79 | 3.4 | 16.0 |
| Example 11 | Triethylamine | 0.68 | 3.2 | 14.1 |
| Comparative Example 5 | Alkanolamine | ND* | 1.8 | 34.0 |
| ND: Impossible to measure because peaks overlapped | | | | |

Although the commercially available column shown in Comparative Example 5 had a retention time of phosphate ion which was extremely redundant as long as 30 minutes or more, fluoride ion overlapped water dip and the separation between chloride ion and nitrite ion was insufficient. On the contrary, in the case of the column for suppressor system ion chromatography provided with the anion exchanger prepared by introducing tertiary heterocyclic amine as described in Examples 7, 8 and 9 according to the present invention, it can be seen that even when setting the retention time of phosphate ion, which is difficult to elute, to 14 to 16 minutes, fluoride ion can be sufficiently separated from water dip and that chloride ion and nitrite ion can be sufficiently separated from each other. It can be said that this is significantly improved as compared with the column provided with the anion exchangers having introduced therein acyclic tertiary amines as described in Examples 10 and 11.

Example 13

A uniformly mixed solution containing 100 g of vinyl acetate, 180 g of triallyl isocyanurate, 150 g of butyl acetate and 10 g of 2,2'-azobis(isobutyronitrile), and 1,400 μl of water having dissolved therein a small amount of polyvinyl alcohol and sodium phosphate were charged into a 51-volume three-neck flask equipped with a reflux condenser and the resulting mixed solution was stirred for 10 minutes. Subsequently, while stirring under nitrogen stream, polymerization was performed at 60°C for 16 hours to obtain a particulate polymer. This polymer was filtrated, washed, extracted with acetone, dried, charged together with 3 1 of caustic soda into a 5 1-volume three-neck flask equipped with a reflux condenser, a nitrogen inlet tube and a stirrer, and saponified while stirring at 15°C for 20 hours under nitrogen stream. The resulting polymer was again filtered, washed and dried. In the polyvinyl alcohol copolymer obtained by the saponification, the density of hydroxyl group was 2.1 meq/g. Using this as a substrate, an anion exchanger was manufactured through the following procedure.

Into 21-volume three-neck flask equipped with a nitrogen inlet tube and a stirrer, 100 g of the dry polymer obtained above, 50 g of 1,4-BGE and 1,000 ml of dimethyl sulfoxide were charged. The resulting mixture was stirred at 35°C for 16 hours under nitrogen stream to introduce a glycidyl group-containing group into the polymer substrate. After the introduction, the polymer was washed with dimethyl sulfoxide and water and then dried by a vacuum dryer. The mass of the dried polymer was 104 g and thus, the increment from the original substrate was 4%.

Into a 2 1-volume three-neck flask equipped with a nitrogen inlet tube and a stirrer, 100 g of the polymer having introduced thereinto a glycidyl group-containing group, 60 ml of a 1% aqueous triethylamine solution and 1,000 ml of water were charged. The resulting solution was stirred at 50°C for 4 hours under nitrogen stream to introduce an amine group, thereby preparing an anion exchanger. This anion exchanger was washed with methanol, 1N hydrochloric acid and 1N caustic soda, by providing intervention of water washing between respective washing operations. Thereafter, the anion exchanger was immersed in 0.5 M sodium carbonate and treated at 60°C for 5 hours, followed by water washing and drying. The thus-obtained anion exchanger had a particle diameter of 5 μm and an ion exchange capacity of about 50 μeq/g.

100 g of the above anion exchanger and 1,000 ml of 1 M sodium carbonate were charged in a 21-volume three-neck flask equipped with a stirrer and treated at 98°C for 1, 2, 3 and 6 hours, followed by washing and drying to obtain various kinds of anion exchangers with controlled retention times, respectively.

The anion exchangers obtained above were each filled under pressure in a polyether ether ketone resin (PEEK)-made column having an inside diameter of 4.6 mm and a length of 150 mm to prepare anion exchange columns. Using MIC-20 (manufactured by Metrohm Ltd.) equipped with a suppressor as the ion chromatograph, a mixed aqueous

solution of 1.8 mM sodium carbonate and 1.7 mM sodium hydrogencarbonate as the eluent was passed through at 1.0 ml/min and 30 μl of an aqueous solution containing 2 mg/l of $F^-$, 5 mg/l of $Cl^-$, 10 mg/l of $NO_2^-$, 10 mg/l of $Br^-$, 10 mg/l of $NO_3^-$, 10 mg/l of $PO_4^{3-}$ and 10 mg/l of $SO_4^{2-}$ was injected as a standard solution into the ion chromatograph while passing through. Fig. 6 shows changes with time in retention time of each ion by the alkali treatment.

Comparative Example 6

Anion exchanger was produced in the same manner as in Example 13 until the quaternary ammonium group was introduced except that thereafter no alkali treatment was performed. The anion exchanger was filled in a column in the same manner as in Example 13 to fabricate a column for ion chromatography. Fig. 6 plots the retention time of each ion at time 0 hr of the alkali treatment.

Example 14

1,4-BGE was introduced to the polyvinyl alcohol-base resin prepared in Example 13 as a substrate in the same formulation as in Example 13.

100 g of the polymer having introduced therein to a glycidyl group-containing group, 4 g of 1-methylpiperidine, and 500 ml of water were charged in a 1 1-volume three-neck flask equipped with a nitrogen inlet tube and a stirrer and stirred at 40°C for 1 hour to introduce tertiary heterocyclic amine to the substrate to prepare an anion exchanger. This was washed with 1N hydrochloric acid and with 1N aqueous sodium hydroxide solution by providing intervention of water washing between respective washing operations. Thereafter, the anion exchanger was immersed in 1N caustic soda and treated at 98°C for 3, 6 and 9 hours, respectively, followed by water washing and drying to obtain various anion exchangers with controlled retention times, respectively.

The anion exchanger obtained as described above was filled in the same column as used in Example 13 and measurement was made in the same manner as in Example 13 except that 18 mM aqueous NaOH solution was used as an eluent and the column temperature was set to 35°C. Fig. 7 shows changes with time in retention time of each ion by the alkali treatment.

Comparative Example 7

Anion exchanger was produced in the same manner as in Example 14 until the quaternary ammonium group was introduced except that thereafter no alkali treatment was performed. The anion exchanger was filled in a column in the same manner as in Example 14 to fabricate a column for ion chromatography. Fig. 7 plots the retention time of each ion at time 0 hr of the alkali treatment.

## Claims

1. Alkali-resistant, high-strength porous polymer particle obtained by reacting a polyvinyl alcohol-base copolymer obtained by saponifying a part of the ester bonds in the copolymer of a carboxylic acid vinyl ester and an isocyanurate-base crosslinking monomer in an alkaline solution to convert into a hydroxyl group or hydroxyl groups, with a compound having two or more glycidyl groups in the molecule to introduce a glycidyl group-containing group such that the mass after the reaction is 103 to 140 assuming that the mass of the polyvinyl alcohol-base copolymer is 100 and then reacting the product with a nitrogen-containing compound in order to introduce a group having a quaternary ammonium structure.

2. The porous polymer particle as claimed in claim 1, wherein the group containing a quaternary ammonium structure is derived from a group selected from trialkylamine, dialkylalkanolamine, N-alkyldialkanolamine, trialkanolamine, and aromatic or non-aromatic nitrogen-containing heterocyclic compounds.

3. The porous polymer particle as claimed in claim 2, wherein the aromatic or non-aromatic nitrogen-containing heterocyclic compound is a compound selected from the group consisting of a pyridine compound represented by formula (1)

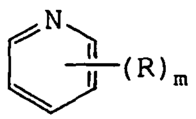

(1)

(wherein R represents an alkyl or alkoxy group having 1 to 5 carbon atoms, which is optionally substituted with a hydroxyl group or a halogen atom, or a halogen atom, and m is an integer of 0 to 5, provided that when m is 2 or more, plural R's may be the same or different),
a 1-alkylpyrrolidine compound represented by formula (2)

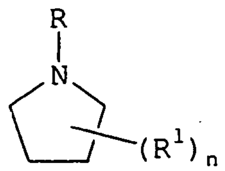

(2)

(wherein R represents an alkyl group having 1 to 5 carbon atoms, which is optionally substituted with a hydroxyl group or a halogen atom, $R^1$ represents a hydroxyl group or an alkyl group or alkoxy group having 1 to 5 carbon atoms, which is optionally substituted with a hydroxyl group, and n is an integer of 0 to 2),
a 1-alkylpiperidine compound represented by formula (3)

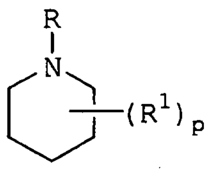

(3)

(wherein R represents an alkyl group having 1 to 5 carbon atoms, which is optionally substituted with a hydroxyl group or a halogen atom, $R^1$ represents a hydroxyl group or an alkyl group or alkoxy group having 1 to 5 carbon atoms, which is optionally substituted with a hydroxyl group, and p is an integer of 0 to 2), and
a 1,4-dialkylpiperazine compound represented by formula (4)

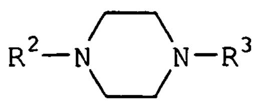

(4)

(wherein $R^2$ and $R^3$, which may be the same or different, independently represent a hydrogen atom, an alkyl group having 1 to 5 carbon atoms, which is optionally substituted with a hydroxyl group or a halogen atom, provided that $R^2$ and $R^3$ do not represent hydrogen atoms simultaneously).

**4.** The porous polymer particle as claimed in any one of claims 1 to 3, wherein the particle has a mean particle diameter of 1 to 30 μm.

**5.** The porous polymer particle as claimed in any one of claims 1 to 4, wherein the particle has a mean pore diameter of 50 to 300 Å.

**6.** An alkali-resistant, high-strength anion exchanger comprising the porous polymer particle as claimed in claim 1.

**7.** A method for producing an alkali-resistant, high-strength porous polymer particle, comprising reacting a polyvinyl alcohol-base copolymer obtained by saponifying a part of the ester bonds in the copolymer of a carboxylic acid vinyl ester and an isocyanurate-base crosslinking monomer in an alkaline solution to convert into a hydroxyl group or hydroxyl groups, with a compound having two or more glycidyl groups in the molecule to introduce a glycidyl group-containing group such that the mass after the reaction is 103 to 140 assuming that the mass of the polyvinyl alcohol-base copolymer is 100 and then reacting the product with a nitrogen-containing compound in order to introduce a group having a quaternary ammonium structure.

**8.** The method for producing an anion exchanger as claimed in claim 7, wherein the group containing a quaternary ammonium structure is derived from a group selected from trialkylamine, dialkylalkanolamine, N-alkyldialkanolamine, trialkanolamine, and aromatic or non-aromatic nitrogen-containing heterocyclic compounds.

**9.** The method for producing an alkali-resistant high-strength anion exchanger as claimed in claim 7, wherein the saponification of the polyvinyl alcohol-base polymer is carried out until from 0.5 to 5 meq/g of a hydroxyl group is generated in the polymer.

**10.** The method for producing an alkali-resistant high-strength anion exchanger as claimed in claim 7 or 9, comprising treating in an alkaline solution.

**11.** The method for producing an alkali-resistant high-strength anion exchanger as claimed in claim 10, wherein a carbonic acid salt solution is used as the alkaline solution.

**12.** Packing material for ion chromatography comprising the anion exchanger as claimed in claim 6.

**Patentansprüche**

**1.** Alkalibeständiges, hochfestes poröses Polymerteilchen, erhalten durch Umsetzen eines Copolymers auf Polyvinylalkoholbasis, welches durch Verseifen eines Teils der Esterbindungen in dem Copolymer eines Carbonsäurevinylesters und eines Vernetzungsmonomers auf Isocyanuratbasis in einer alkalischen Lösung, um in eine Hydroxygruppe oder Hydroxygruppen umzuwandeln, erhalten wird, mit einer Verbindung mit zwei oder mehr Glycidylgruppen im Molekül, um eine glycidylgruppenhaltige Gruppe einzuführen, derart, dass die Masse nach der Umsetzung 103 bis 140 ist, unter der Annahme, dass die Masse des Copolymers auf Polyvinylalkoholbasis 100 ist, und anschließend Umsetzen des Produkts mit einer stickstoffhaltigen Verbindung, um eine Gruppe mit einer quaternären Ammoniumstruktur einzuführen.

**2.** Poröses Polymerteilchen nach Anspruch 1, wobei die eine quaternäre Ammoniumstruktur enthaltende Gruppe von einer Gruppe abgeleitet ist, ausgewählt aus Trialkylamin, Dialkylalkanolamin, N-Alkyldialkanolamin, Trialkanolamin und aromatischen oder nicht-aromatischen stickstoffhaltigen heterocyclischen Verbindungen.

**3.** Poröses Polymerteilchen nach Anspruch 1, wobei die aromatische oder nicht-aromatische stickstoffhaltige heterocyclische Verbindung eine Verbindung ist, ausgewählt aus der Gruppe, bestehend aus einer Pyridinverbindung der Formel (1)

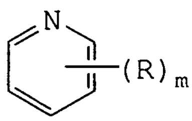

(1)

(worin R eine Alkyl- oder Alkoxygruppe mit 1 bis 5 Kohlenstoffatomen darstellt, die wahlweise mit einer Hydroxygruppe oder einem Halogenatom substituiert ist, oder ein Halogenatom, und m eine ganze Zahl von 0 bis 5 ist, mit der Maßgabe, dass wenn 2 oder mehr ist, mehrere R gleich oder verschieden sein können),
einer 1-Alkylpyrrolidinverbindung der Formel (2)

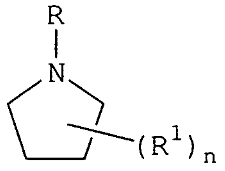

(2)

(worin R eine Alkylgruppe mit 1 bis 5 Kohlenstoffatomen darstellt, die wahlweise mit einer Hydroxygruppe oder einem Halogenatom substituiert ist, $R^1$ eine Hydroxygruppe oder eine Alkylgruppe oder Alkoxygruppe mit 1 bis 5 Kohlenstoffatomen darstellt, die wahlweise mit einer Hydroxygruppe substituiert ist, und n eine ganze Zahl von 0 bis 2 ist),
einer 1-Alkylpiperidinverbindung der Formel (3)

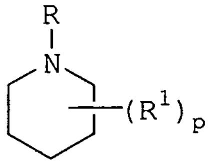

(3)

(worin R eine Alkylgruppe mit 1 bis 5 Kohlenstoffatomen darstellt, die wahlweise mit einer Hydroxygruppe oder einem Halogenatom substituiert ist, $R^1$ eine Hydroxygruppe oder eine Alkylgruppe oder Alkoxygruppe mit 1 bis 5 Kohlenstoffatomen darstellt, die wahlweise mit einer Hydroxygruppe substituiert ist, und p eine ganze Zahl von 0 bis 2 ist), und
einer 1,4-Dialkylpiperazinverbindung der Formel (4)

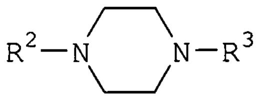

(4)

(worin $R^2$ und $R^3$, die gleich oder verschieden sein können, unabhängig ein Wasserstoffatom, eine Alkylgruppe mit 1 bis 5 Kohlenstoffatomen, die wahlweise mit einer Hydroxygruppe oder einem Halogenatom substituiert ist, darstellen, mit der Maßgabe, dass $R^2$ und $R^3$ nicht gleichzeitig Wasserstoffatome darstellen).

**4.** Poröses Polymerteilchen nach einem der Ansprüche 1 bis 3, wobei das Teilchen einen mittleren Teilchendurchmesser von 1 bis 30 μm aufweist.

**5.** Poröses Polymerteilchen nach einem der Ansprüche 1 bis 4, wobei das Teilchen einen mittleren Porendurchmesser von 50 bis 300 Å aufweist.

**6.** Alkalibeständiger, hochfester Anionenaustauscher, umfassend das poröse Polymerteilchen nach Anspruch 1.

**7.** Verfahren zur Herstellung eines alkalibeständigen, hochfesten porösen Polymerteilchens, umfassend das Umsetzen eines Copolymers auf Polyvinylalkoholbasis, welches durch Verseifen eines Teils der Esterbindungen in dem Copolymer eines Carbonsäurevinylesters und eines Vernetzungsmonomers auf Isocyanuratbasis in einer alkalischen Lösung, um in eine Hydroxygruppe oder Hydroxygruppen umzuwandeln, erhalten wird, mit einer Verbindung mit zwei oder mehr Glycidylgruppen im Molekül, um eine glycidylgruppenhaltige Gruppe derart einzuführen, dass die Masse nach der Umsetzung 103 bis 140 ist, unter der Annahme, dass die Masse des Copolymers auf Polyvinylalkoholbasis 100 ist, und anschließend Umsetzen des Produkts mit einer stickstoffhaltigen Verbindung, um eine Gruppe mit einer quaternären Ammoniumstruktur einzuführen.

**8.** Verfahren zur Herstellung eines Anionenaustauschers nach Anspruch 7, wobei die eine quaternäre Ammoniumstruktur enthaltende Gruppe von einer Gruppe abgeleitet ist, welche aus Trialkylamin, Dialkylalkanolamin, N-Alkyldialkanolamin, Trialkanolamin und aromatischen oder nicht-aromatischen stickstoffhaltigen heterocyclischen Verbindungen ausgewählt ist.

**9.** Verfahren zur Herstellung eines alkalibeständigen, hochfesten Anionenaustauschers nach Anspruch 7, wobei die Verseifung des Polymers auf Polyvinylalkoholbasis durchgeführt wird, bis von 0,5 bis 5 meq/g einer Hydroxygruppe in dem Polymer erzeugt sind.

**10.** Verfahren zur Herstellung eines alkalibeständigen, hochfesten Anionenaustauschers nach Anspruch 7 oder 9, welches die Behandlung in einer alkalischen Lösung beinhaltet.

**11.** Verfahren zur Herstellung eines alkalibeständigen, hochfesten Anionenaustauschers nach Anspruch 10, wobei eine Kohlensäuresalzlösung als die alkalische Lösung verwendet wird.

**12.** Füllmaterial für die Ionenchromatographie, umfassend den Anionenaustauscher nach Anspruch 6.

## Revendications

**1.** Particule de polymère poreuse à haute résistance mécanique, résistante aux alcalis obtenue par réaction d'un copolymère à base de poly(alcool vinylique) obtenu par saponification d'une partie des liaisons ester dans le copolymère d'un vinylester d'acide carboxylique et d'un monomère réticulant à base d'isocyanurate dans une solution alcaline pour convertir en un groupe hydroxyle ou en des groupes hydroxyle, avec un composé ayant deux ou plusieurs groupes glycidyle dans la molécule pour introduire un groupe contenant un ou des groupes glycidyle de sorte que la masse après la réaction est 103 à 140 en admettant que la masse du copolymère à base de poly(alcool vinylique) est 100 puis réaction du produit avec un composé contenant de l'azote pour introduire un groupe ayant une structure d'ammonium quaternaire.

**2.** Particule de polymère poreuse selon la revendication 1, où le groupe contenant une structure d'ammonium quaternaire est dérivé d'un groupe choisi parmi une trialkylamine, une dialkylalcanolamine, une N-alkyldialcanolamine, une trialcanolamine et les composés hétérocycliques contenant de l'azote aromatiques ou non aromatiques.

**3.** Particule de polymère poreuse selon la revendication 2, où le composé hétérocyclique contenant de l'azote aromatique ou non aromatique est un composé choisi dans le groupe consistant en un composé de la pyridine représenté par la formule (1)

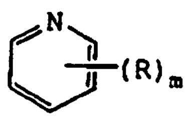

(1)

(où R représente un groupe alkyle ou alcoxy ayant 1 à 5 atomes de carbone, qui est éventuellement substitué avec un groupe hydroxyle ou un atome d'halogène, ou un atome d'halogène, et m est un entier de 0 à 5, à condition que, quand m est 2 ou plus, les R puissent être identiques ou différents),
un composé de 1-alkylpyrrolidine représenté par la formule (2)

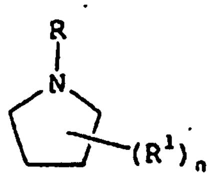

(2)

(où R représente un groupe alkyle ayant 1 à 5 atomes de carbone, qui est éventuellement substitué avec un groupe hydroxyle ou un atome d'halogène, $R^1$ représente un groupe hydroxyle ou un groupe alkyle ou un groupe alcoxy ayant 1 à 5 atomes de carbone, qui est éventuellement substitué avec un groupe hydroxyle, et n est un entier de 0 à 2),

un composé de 1-alkylpipéridine représenté par la formule (3)

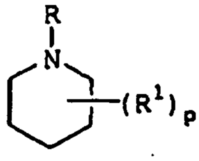

(3)

(où R représente un groupe alkyle ayant 1 à 5 atomes de carbone, qui est éventuellement substitué avec un groupe hydroxyle ou un atome d'halogène, $R^1$ représente un groupe hydroxyle ou un groupe alkyle ou un groupe alcoxy ayant 1 à 5 atomes de carbone, qui est éventuellement substitué avec un groupe hydroxyle, et p est un entier de 0 à 2), et

un composé de 1,4-dialkylpipérazine représenté par la formule (4)

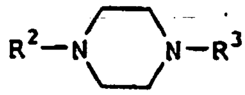

(4)

(où $R^2$ et $R^3$, qui peuvent être identiques ou différents, représentent indépendamment un atome d'hydrogène, un groupe alkyle ayant 1 à 5 atomes de carbone, qui est éventuellement substitué avec un groupe hydroxyle ou un atome d'halogène, à condition que $R^2$ et $R^3$ ne représentent pas des atomes d'hydrogène simultanément).

**4.** Particule de polymère poreuse selon l'une quelconque des revendications 1 à 3, où la particule a un diamètre de particule moyen de 1 à 30 μm.

**5.** Particule de polymère poreuse selon l'une quelconque des revendications 1 à 4, où la particule a un diamètre de pore moyen de 50 à 300 Å.

**6.** Echangeur d'anions à haute résistance mécanique, résistant aux alcalis comprenant la particule de polymère poreuse selon la revendication 1.

**7.** Procédé pour produire une particule de polymère poreuse à haute résistance mécanique, résistante aux alcalis, comprenant la réaction d'un copolymère à base de poly(alcool vinylique) obtenu par saponification d'une partie des liaisons ester dans le copolymère d'un vinylester d'acide carboxylique et d'un monomère réticulant à base d'isocyanurate dans une solution alcaline pour convertir en un groupe hydroxyle ou en des groupes hydroxyle, avec un composé ayant deux ou plusieurs groupes glycidyle dans la molécule pour introduire un groupe contenant un ou des groupes glycidyle de sorte que la masse après la réaction est 103 à 140 en admettant que la masse du copolymère à base de poly(alcool vinylique) est 100 puis réaction du produit avec un composé contenant de l'azote pour introduire un groupe ayant une structure d'ammonium quaternaire.

**8.** Procédé pour produire un échangeur d'anions selon la revendication 7, où le groupe contenant une structure d'ammonium quaternaire est dérivé d'un groupe choisi parmi une trialkylamine, une dialkylalcanolamine, une N-alkyldialcanolamine, une trialcanolamine et les composés hétérocycliques contenant de l'azote aromatiques ou non aromatiques.

**9.** Procédé pour produire un échangeur d'anions à haute résistance mécanique résistant aux alcalis selon la revendication 7, où la saponification du polymère à base de poly(alcool vinylique) est conduite jusqu'à ce que de 0,5 à 5 meq/g d'un groupe hydroxyle soit produits dans le polymère.

**10.** Procédé pour produire un échangeur d'anions à haute résistance mécanique résistant aux alcalis selon la revendication 7 ou 9 comprenant le traitement dans une solution alcaline.

**11.** Procédé pour produire un échangeur d'anions à haute résistance mécanique résistant aux alcalis selon la revendication 10, où une solution de sel d'acide carbonique est utilisée comme solution alcaline.

**12.** Matériau de garnissage pour chromatographie ionique comprenant l'échangeur d'anions selon la revendication 6.

Fig.1

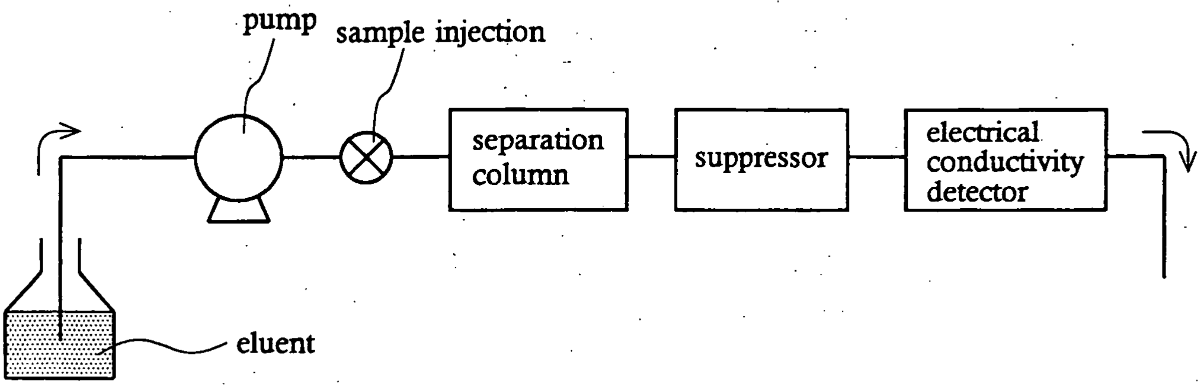
pump
sample injection
separation column
suppressor
electrical conductivity detector
eluent

Fig.2

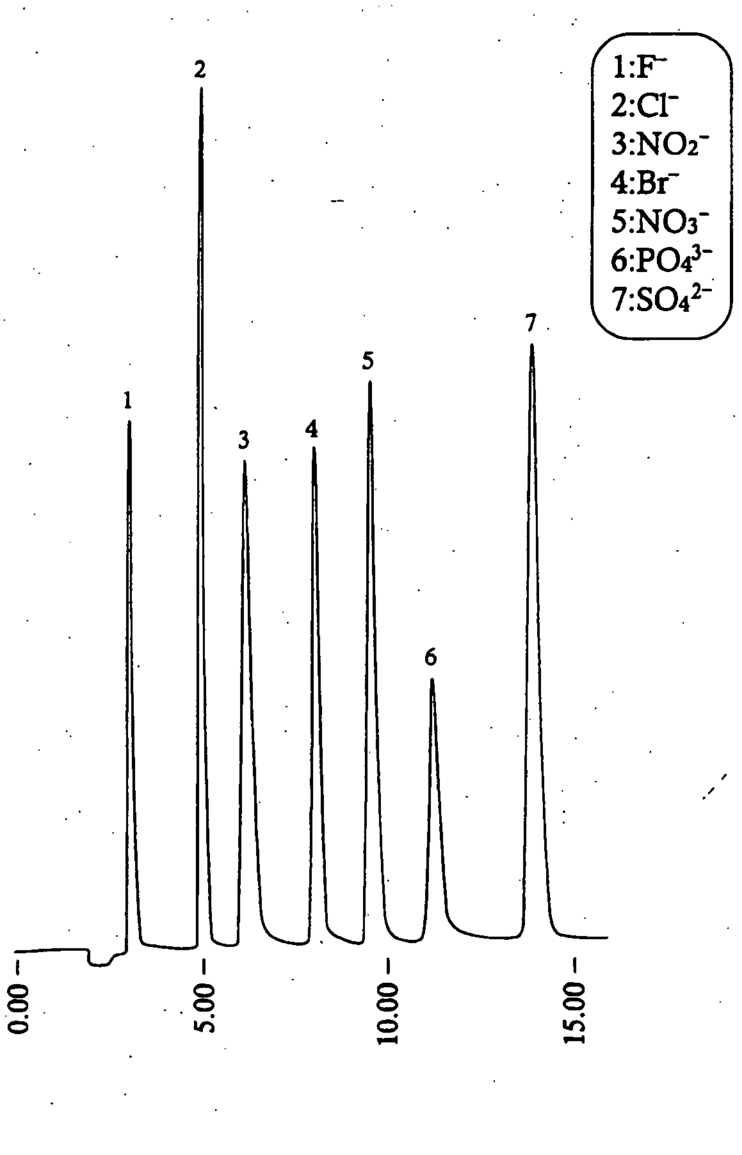

Fig.3

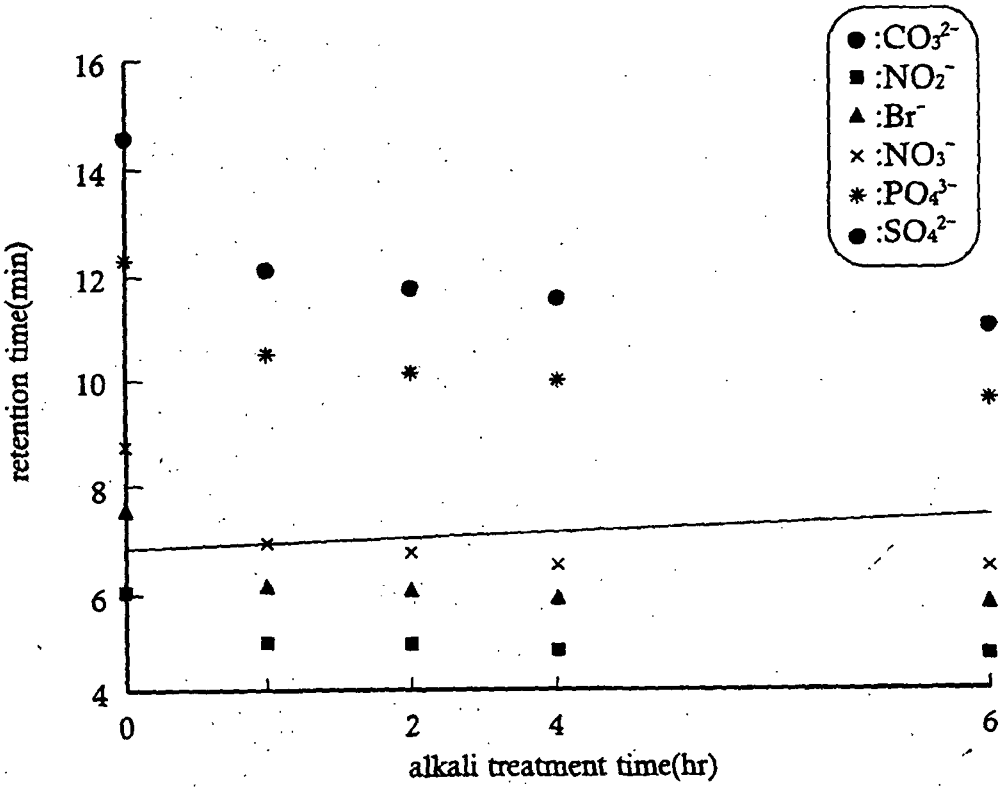

:$CO_3^{2-}$
:$NO_2^-$
:$Br^-$
:$NO_3^-$
:$PO_4^{3-}$
:$SO_4^{2-}$
16
14
12
10
8
6
4
retention time(min)
0
2
4
6
alkali treatment time(hr)

Fig.4

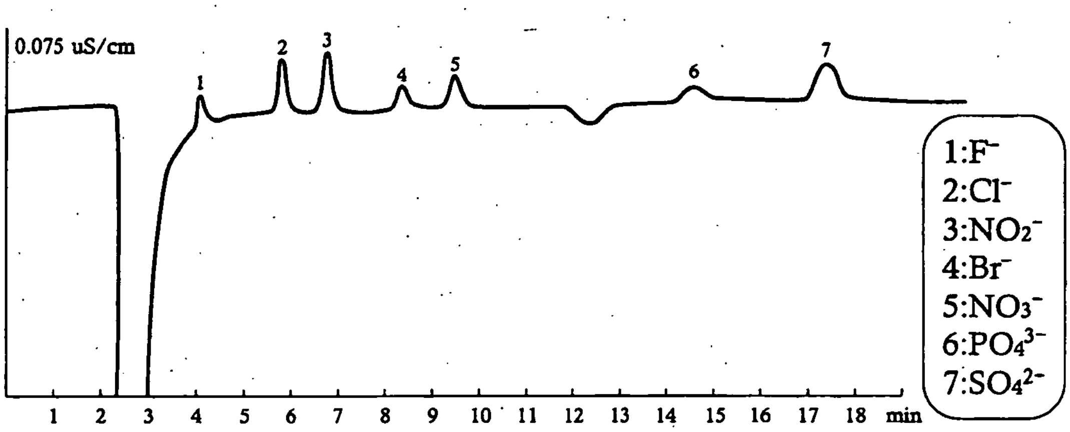
0.075 uS/cm
1
2
3
4
5
6
7
1 2 3 4 5 6 7 8 9 10 11 12 13 14 15 16 17 18 min
1:F⁻
2:Cl⁻
3:NO2⁻
4:Br⁻
5:NO3⁻
6:PO4³⁻
7:SO4²⁻

Fig.5

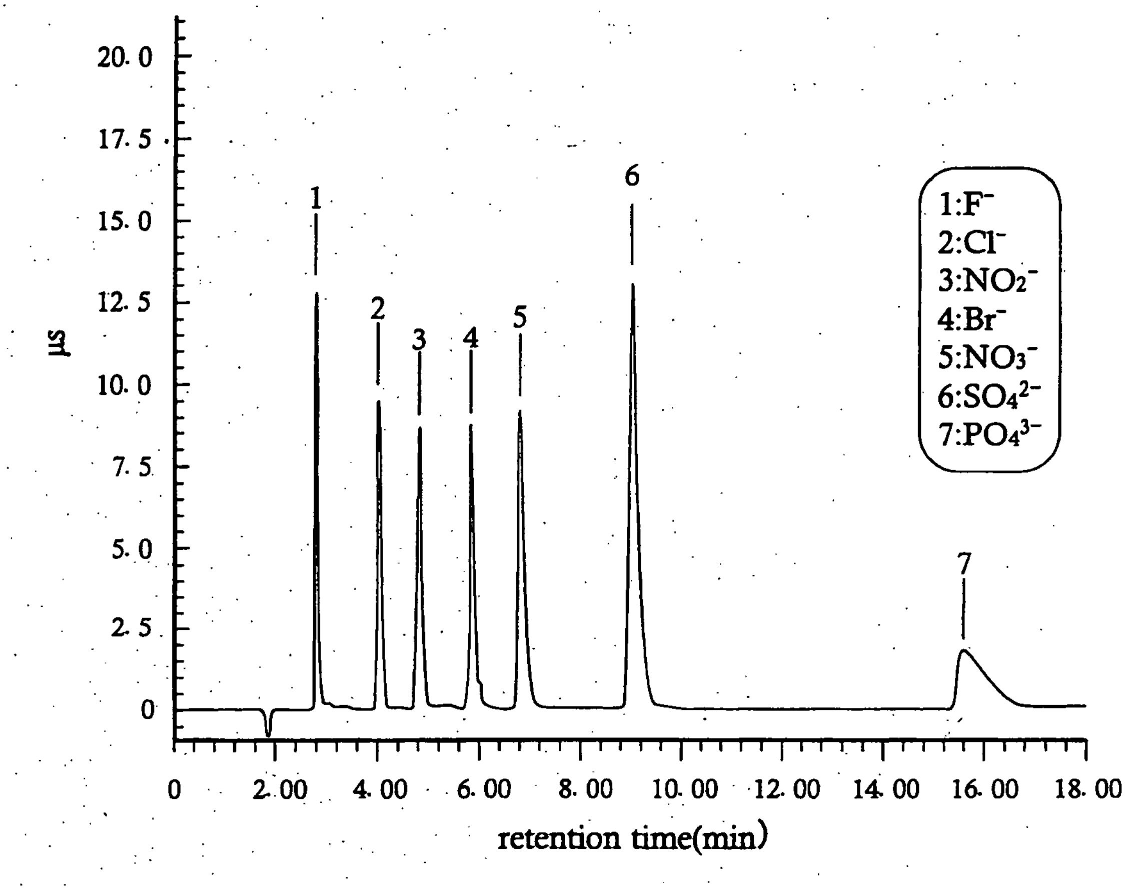

μS
20.0
17.5
15.0
12.5
10.0
7.5
5.0
2.5
0
1
2
3
4
5
6
7
1:F⁻
2:Cl⁻
3:NO2⁻
4:Br⁻
5:NO3⁻
6:SO4²⁻
7:PO4³⁻
0
2.00
4.00
6.00
8.00
10.00
12.00
14.00
16.00
18.00
retention time(min)

Fig.6

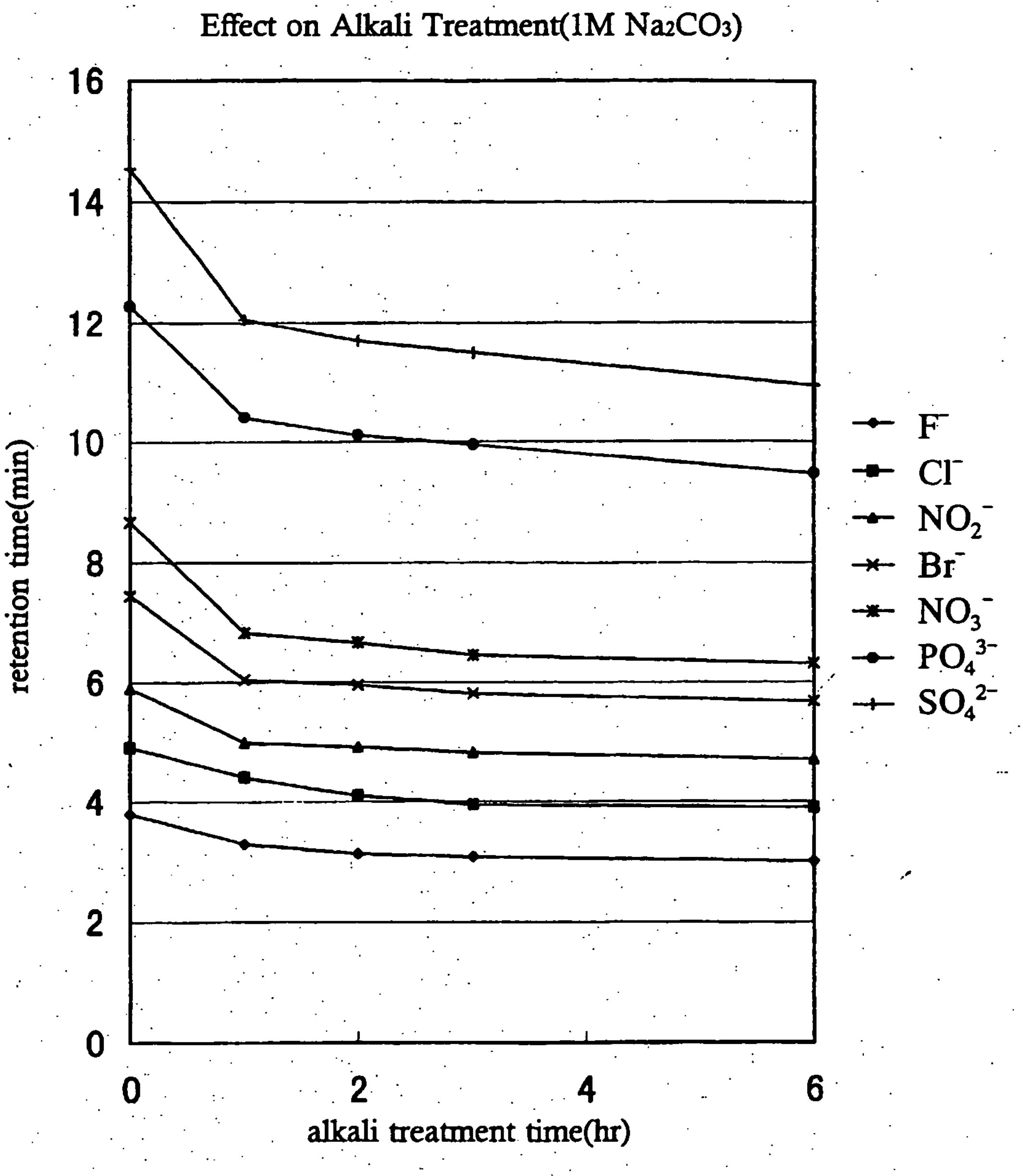
Effect on Alkali Treatment(1M Na2CO3)
16
14
12
10
8
6
4
2
0
retention time(min)
0
2
4
6
alkali treatment time(hr)
F⁻
Cl⁻
$NO_2^-$
Br⁻
$NO_3^-$
$PO_4^{3-}$
$SO_4^{2-}$

Fig.7

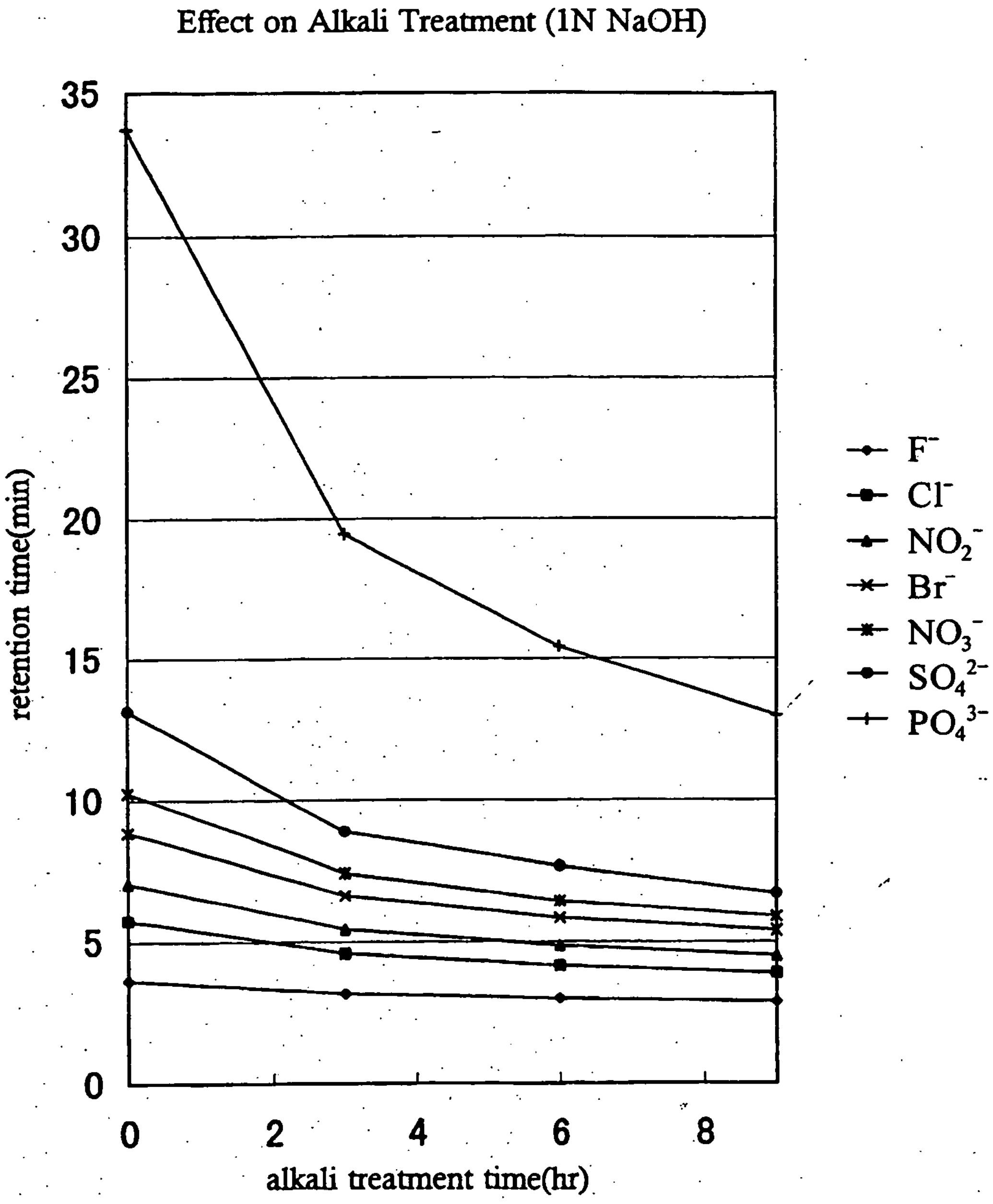
Effect on Alkali Treatment (1N NaOH)
retention time(min)
35
30
25
20
15
10
5
0
0
2
4
6
8
alkali treatment time(hr)
F⁻
Cl⁻
NO2⁻
Br⁻
NO3⁻
SO4 2-
PO4 3-

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62079356 A
- JP 9124729 A
- JP 7037972 B
- JP 2000180429 A
- JP 77035779 A
- EP 0066165 A1
- JP 63061619 B

### Non-patent literature cited in the description

- *J. Chromedogr.,* 1987, vol. 387, 65
- *Angw. Chem. Int. Ed. Engl.,* 1987, vol. 17, 901-908